# EUROPÄISCHE PATENTSCHRIFT

(11) **EP 2 433 882 B1**
(45) Veröffentlichungstag und Bekanntmachung des Hinweises auf die Patenterteilung: **08.05.2013**
(21) Anmeldenummer: 11182152.6
(22) Anmeldetag: 21.09.2011
(51) Int. Cl.: B65G 1/04

(54) **Einrichtung zum Einlagern von Waren**
Device for storing goods
Dispositif pour le stockage de produits

(30) Priorität: 22.09.2010 AT 15742010
(43) Veröffentlichungstag der Anmeldung: 28.03.2012
(73) Patentinhaber: TGW Mechanics GmbH, 4600 Wels (AT)
(72) Erfinder: Schauer, Johannes, 4707 Schlüsselberg (AT); Wolkerstorfer, Christoph, 4600 Wels (AT); Angleitner, Karl, 4600 Wels (AT)
(74) Vertreter: Burger, Hannes

(56) Entgegenhaltungen:
- EP-A1- 0 733 563
- EP-A1- 1 285 866
- EP-A1- 1 772 400
- WO-A1-2010/049987
- AT-A4- 506 221
- DE-A1-102008 003 157
- DE-U1-202004 004 620
- JP-A- 50 008 270
- US-A1- 2003 185 656

## Beschreibung

Die Erfindung betrifft ein Teleskoparm sowie ein mit einem derartigen Teleskoparm ausgerüstetes Lastaufnahmemittel, wie dies in den Ansprüchen 1und 11 beschrieben ist.

Aus der WO 2010/049987 A1 bzw. der EP 2 351 698 A1 ist ein Transfershuttle zum Ein- und Auslagern von Waren in ein bzw. aus einem Regalfach eines Regallagers mit dort in Ein- bzw. Ausschubrichtung hintereinander angeordneten Abstellplätzen bekannt geworden. Auf einem Laufwagen des Transfershuttles sind Teleskoparme jeweils in seinem vorderen und hinteren Bereich in Richtung der Laufrichtung des Laufwagens gesehen angeordnet, wobei die Teleskoparme zwischen sich einen Lastablagebereich einschließen. Jeder der Teleskoparme ist aus mehreren Schlitten gebildet, welche in Bezug auf die Laufrichtung des Transfershuttles in einer rechtwinkelig dazu verlaufenden waagrechten Querrichtung teleskopierbar sind. An jedem Ende jenes Schlittens mit der größten Bewegbarkeit sind Mitnahmeorgane angeordnet, welche gegenüber dem Schlitten von einer Mitnahmeposition, in der sie hin zum Lastablagebereich vorragen, in eine Ruheposition, in der sie vom Lastablagebereich zurückverstellt sind, bewegt werden können. Zusätzlich können zwischen den äußersten Mitnahmeorganen an den Schlitten mit der größten Bewegbarkeit zusätzliche Mitnahmeorgane vorgesehen sein. Zur Erreichung einer höheren Lagerkapazität ist eines der Mitnahmeorgane relativ gegenüber dem Schlitten in Verstellrichtung der Teleskoparme relativ dazu verlagerbar. Dadurch können die ein- bzw. auszulagernden Waren auf den dafür vorgesehenen Abstellplatz im Regalfach entsprechend positioniert werden.

Die AT 007 107 U1 beschreibt ein Lagersystem mit Regallagern und einem zwischen den Regallagern verfahrbaren Förderfahrzeug mit einem Lastaufnahmemittel, bei dem die Regallager horizontale Regalfächer ausbilden. Das Lastaufnahmemittel umfasst einen Grundrahmen, eine Hubplattform, eine Antriebsanordnung sowie Teleskoparme, mit denen die Waren in das Regalfach eingeschoben und auch wieder entnommen werden können. Die Teleskoparme umfassen jeweils einen Tragrahmen bezüglich welchem zumindest ein Mittel- und Oberschlitten relativ dazu verstellbar ist. Zur Erzielung einer großen Verfahrlänge weist jeder der Teleskoparme mehrere, beispielsweise zwei, drei Mittelschlitten und/oder mehrere, beispielsweise zwei, drei Oberschlitten auf. Dadurch kann mit einer ausreichenden Überdeckung bzw. Führungslänge ein langer Gesamtfahrweg bis hin zum gassenfernsten Abstellplatz erzielt werden.

Weitere Lastaufnahmemittel mit unterschiedlich ausgebildeten Teleskopschubarmen sind aus der WO 2009/086578 A1, der EP 1772 400 A1, der DE 10140 643 A1, der WO 2004/102883 A1, der WO 2009/000302 Alsowie der EP 1 172 311 A2 bekannt geworden.

EP 0 733 563 beschreibt ein gattungsgemäßes Teleskoparm.

Der vorliegenden Erfindung liegt die Aufgabe zugrunde, ein Teleskoparm sowie ein mit einem derartigen Teleskoparm ausgerüstetes Lastaufnahmemittel zu schaffen, bei dem das Lastaufnahmemittel einfach und kompakt ausgebildet ist und trotzdem ein hoher Füllungsgrad des zur Verfügung stehenden Nutzvolumen des Regallagers mit diesem Lastaufnahmemittel erzielt werden kann.

Die Aufgabe der Erfindung wird durch die Merkmale des Anspruches 1 gelöst. Die sich aus der Merkmalskombination dieses Anspruches ergebenden Vorteile liegen darin, dass aufgrund der unterschiedlichen Kombination der Führungen der Platzbedarf gering gehalten werden kann und trotzdem eine ausreichende Führungsgenauigkeit der einzelnen Teleskoparme während dem Ein- und Auslagerungsvorgang erreichbar ist. Mit der als Wälzführung ausgebildeten Führungsanordnung zwischen dem Untertisch und dem Mitteltisch wird der Mitteltisch mit einer sehr hohen Führungsgenauigkeit und relativ geringem Platzbedarf am Untertisch geführt. Durch die Kombination mit der Gleitführung und der damit ausgebildeten weiteren Führungsanordnung, wird zwischen dem Obertisch und dem Mitteltisch trotzdem bei geringstem Platzaufwand eine noch ausreichende Führungsgenauigkeit erzielt. Weiters kann durch die kombinierten Führungen eine sehr schlanke Bauweise des oder der Teleskoparme erzielt werden, wodurch zwischen unmittelbar nebeneinander angeordneten Warenreihen mit einem sehr geringen Platzbedarf zum Hinein- und Herausbewegen der Teleskoparme das Auslangen gefunden werden kann.

Vorteilhaft ist auch noch, wenn eine erste Führungsanordnung zwischen dem Untertisch und dem Mitteltisch durch eine Wälzführung und eine weitere Führungsanordnung zwischen dem Mitteltisch und dem Obertisch durch eine Gleitführung gebildet wird, wodurch aufgrund der unterschiedlichen Kombination der Führungen der Platzbedarf gering gehalten werden kann und trotzdem eine ausreichende Führungsgenauigkeit der einzelnen Teleskoparme während dem Ein- und Auslagerungsvorgang erreichbar ist. Mit der als Wälzführung ausgebildeten Führungsanordnung zwischen dem Untertisch und dem Mitteltisch wird der Mitteltisch mit einer sehr hohen Führungsgenauigkeit und relativ geringem Platzbedarf am Untertisch geführt. Durch die Kombination mit der Gleitführung und der damit ausgebildeten weiteren Führungsanordnung, wird zwischen dem Obertisch und dem Mitteltisch trotzdem bei geringstem Platzaufwand eine noch ausreichende Führungsgenauigkeit erzielt. Weiters kann durch die kombinierten Führungen eine sehr schlanke Bauweise des oder der Teleskoparme erzielt werden, wodurch zwischen unmittelbar nebeneinander angeordneten Warenreihen mit einem sehr geringen Platzbedarf zum Hinein- und Herausbewegen der Teleskoparme das Auslangen gefunden werden kann.

Weiters ist es vorteilhaft, wenn die einzelnen im Regalfach in der Warenreihe hintereinander angeordneten Waren in Förderrichtung in einem Abstand zueinander abgestellt werden, weil dadurch auch eine einzelne Entnahme der hintereinander angeordneten Waren der Warenreihe ermöglicht wird. Dadurch kann die Flexibilität des gesamten Lagersystems zusätzlich erhöht werden.

Vorteilhaft ist auch eine weitere Ausführungsform nach Anspruch 2, da so eine Wälzführung im Bereich des Untertisches für den dazu relativ verlagerbaren Mitteltisch ausgebildet werden kann, welche im Zusammenwirken mit dem Mitteltisch eine hohe Führungsgenauigkeit aufweist. Die dabei eingesetzten Führungsrollen können dabei nicht nur eine Führungsfunktion für den Mitteltisch übernehmen, sondern zusätzlich auch noch zur Führung bzw. Abstützung des Zugmittels der Antriebsanordnung dienen. Mit dieser Doppelfunktion kann mit geringstem Platzbedarf das Auslangen gefunden werden, um so eine sehr schlanke und kompakte Bauweise des Teleskoparmes zu erzielen.

Vorteilhaft ist weiters, wenn die Führungsrollen jeder Führungsrollenreihe jeweils paarweise zueinander in senkrechter Richtung bezüglich der Bewegungsrichtung des Mitteltisches zueinander ausgerichtet sind, da so eine exakte Einspannung des Mitteltisches durch zusammengehörige Führungsrollenpaare erreicht werden kann und so bei geringem Platzbedarf ein hoher Verfahrweg des Mitteltisches relativ bezüglich des Untertisches erreicht wird.

Durch die Ausbildung nach Anspruch 3 ist es möglich, auf geringstem Raum eine exakte Führung des Mitteltisches zu erzielen. Durch die nutförmige Vertiefung in den einzelnen Führungsrollen kann der erste Führungsabschnitt des Mitteltisches als sogenannte Linealführung ausgebildet werden. Je nach dem gewählten Querschnitt der nutförmigen Vertiefung lässt sich auch noch die Längs- und/oder Höhenführung des Mitteltisches relativ gegenüber dem Untertisch verbessern. Weiters kann aber dadurch auch die Seitenstabilität der Führung verbessert werden.

Nach einer anderen Ausführungsvariante gemäß Anspruch 4 wird in Kombination mit der Wälzführung auf geringstem Raum eine Führungsanordnung geschaffen, welche bei vertretbarem Kostenaufwand eine ausreichende Führungsgenauigkeit bietet. Dadurch, dass die Gleitelemente bei deren Bewegung einen höheren Verschleiß aufweisen als die Wälzführung, wird diese zwischen dem Mitteltisch und dem Obertisch eingesetzt, da hier geringere Kräfte ausgehend vom Obertisch hin auf den Mitteltisch übertragen werden müssen.

Dabei erweist sich die erfindungsgemäße Ausgestaltung vorteilhaft, da durch die Ausbildung des Mitteltisches als Leichtbauträger, so bei geringsten Querschnittsabmessungen trotzdem eine hohe Tragfähigkeit desselben erzielt werden kann. Damit können die beim Ein- und Auslagern der Waren auftretenden Kräfte nahezu verformungslos aufgenommen werden.

Nach einer vorteilhaften Weiterbildung wird so ein Teil des Mitteltisches geschaffen, wobei durch die Wahl des Flachprofils und der Distanzierung von Längsseitenkanten eine hohe Steifigkeit erzielt werden kann. Zusätzlich werden die Längsseitenkanten auch als Teil der Führungsabschnitte ausgebildet, um so ein hohes Ausmaß an Platzbedarf einsparen zu können. Durch die Ausbildung der Führungsabschnitte an den Längsseitenkanten wird in Kombination mit den Führungsrollen eine ausreichend tragfeste Wälzführung mit geringsten Verstelltoleranzen erzielt.

Von Vorteil ist aber auch eine Ausbildung nach Anspruch 6, da so ein großes Verstellspektrum der Teleskoparme erreicht wird. Damit kann weiters die lichte Weite zwischen der Oberkante der Hubplattform und der Unterkante der gemeinsamen Antriebswelle optimal an das höchste vorkommende Fördergut angepasst werden. Dadurch werden kleinstmögliche Höhen des Lastaufnahmemittels erreicht. Dies verringert das untere und obere Anfahrmaß des Lastaufnahmemittels, wodurch so das maximal mögliche Lagervolumen zusätzlich erhöht werden kann.

Gemäß Anspruch 7 wird bei geringstem Platzbedarf durch die kombinierte Verwendung der Führungsrollen für den Mitteltisch gleichzeitig auch noch eine Abstützung des Zugmittels daran erreicht. Dadurch wird auf engstem Raum die Wälzführung des Mitteltisches über die Führungsrollen am Untertisch erreicht und andererseits die Antriebsbewegung, ausgehend von der Antriebsanordnung über das Zugmittel hin auf den Mitteltisch übertragen. Dadurch können zusätzliche Leit- und Führungselemente eingespart werden, wodurch die Gesamtmasse des Lastaufnahmemittels weiter reduziert werden kann.

Bei der Ausbildung gemäß Anspruch 8 wird eine geleitete Rückführung des Zugmittels hin zur Antriebseinheit, insbesondere dessen Antriebsrad erreicht. Zusätzlich lässt sich dadurch aber auch noch je nach gewähltem Abstand der gemeinsamen Antriebswelle hin zur Oberseite der Hubplattform eine Anpassung an die jeweilige größte Höhe des Fördergutes erreichen. Damit kann wiederum das obere und untere Anfahrmaß des Lastaufnahmemittels möglichst gering ausgebildet werden.

Möglich ist dabei auch eine Ausbildung nach Anspruch 9 weil dadurch auf zusätzliche Leit- und Führungselemente verzichtet werden kann.

Die Ausgestaltung nach Anspruch 10 ermöglicht ein kollisionsfreies Einschwenken des Mitnahmeorgans, um so Beschädigungen einerseits des Fördergutes und andererseits des Mitnahmeorgans zu vermeiden. Durch die gefederte Ausschwenkmöglichkeit des Schwenkhebels kann auf eine exakte Zentrierung des Fördergutes relativ bezüglich der Teleskoparme verzichtet werden und trotzdem eine einwandfreie Ein- und Ausschubbewegung erzielt werden.

Die sich aus der Merkmalskombination des Anspruches 11 ergebenden Vorteile liegen darin, dass so ein Lastaufnahmemittel mit Teleskoparmen ausgestattet werden kann, bei welchem die Teleskoparme mit einer geringen Anzahl an verstellbaren Tischen ausgebildet sind und trotzdem ein großer bzw. langer Verstellweg erzielt werden kann. Damit kann eine vermehrte Anzahl von Waren in die Regalfächer eingeschoben und auch wieder ausgelagert werden.

Von Vorteil ist aber auch, wenn die beiden Teleskoparme am Grundrahmen geführt gelagert sind und in Querrichtung zu deren Bewegungsrichtung zentrisch bezüglich des Lastaufnahmemittels verstellbar sind, da so stets durch die relative Verstellung der Teleskoparme zueinander eine zentrische Ausrichtung der ein- bzw. auszulagernden Waren bezüglich des Lastaufnahmemittels erfolgen kann. Durch diese zentrische Ausrichtung ist es möglich, das in den einzelnen Regalfächern vorhandene Platz- bzw. Raumangebot noch besser ausnutzen zu können.

Vorteilhaft ist, wenn die Antriebsanordnung der Teleskoparme zumindest ein Zugmittel umfasst und dass mit jedem der oberhalb der Führungsanordnungen umgelenkten Zugmittel der Teleskoparme ein eigenes Antriebsrad in Antriebsverbindung steht und weiters mit den Antriebsrädern ein Antriebsmotor in Antriebsverbindung steht, da so jeder Teleskoparm sein eigenes Zugmittel umfasst, welches auch von einem eigenen Antriebsrad angetrieben wird. Je nach Dimension des Lastaufnahmemittels kann dadurch eine hohe Flexibilität erzielt werden.

Schließlich ist aber auch möglich, dass die Antriebsverbindung ausgehend vom Antriebsmotor hin zu den Antriebsrädern über eine gemeinsame sich zwischen den beiden Teleskoparmen erstreckende Antriebswelle erfolgt, da so mit nur einem einzigen Antriebsmotor das Auslangen gefunden werden kann. Weiters können dadurch aber auch zusätzliche Steuerelemente sowie gegenseitige Synchronisiervorgänge eingespart werden, wodurch die Effektivität des gesamten Lastaufnahmemittels zusätzlich noch erhöht werden kann.

Zum besseren Verständnis der Erfindung wird diese anhand der nachfolgenden Figuren näher erläutert.

Es zeigen jeweils in stark schematisch vereinfachter Darstellung:
- Fig. 1: einen Teilbereich eines Lagersystems mit einem Förderfahrzeug, in Draufsicht;
- Fig. 2: ein mögliches Einlagerungsschema vom Lastaufnahmemittel hin ins Regallager;
- Fig. 3: ein weiteres Einlagerungsschema vom Lastaufnahmemittel hin ins Regallager;
- Fig. 4: das erfindungsgemäße Lastaufnahmemittel, in schaubildlicher Darstellung;
- Fig. 5: das Lastaufnahmemittel nach Fig. 4 mit maximal voneinander distanzierten Teleskoparmen, in Ansicht;
- Fig. 6: das Lastaufnahmemittel nach den Fig. 4 und 5 mit minimal voneinander distanzierten Teleskoparmen, in Ansicht;
- Fig. 7: einen Teleskoparm des Lastaufnahmemittels mit teilweise gegeneinander verstellten Tischen, in schaubildlicher Darstellung;
- Fig. 8: den Teleskoparm nach den Fig. 4 bis 7, in Ansicht geschnitten;
- Fig. 9: einen Teilabschnitt des Mittelschlittens des Teleskoparms nach den Fig. 4 bis 7, in schaubildlicher Darstellung;
- Fig. 10: den Mittelschlitten des Teleskoparms nach den Fig. 4 bis 8, in Ansicht geschnitten;

- Fig. 11: einen Teilbereich des Teleskoparms mit einem Mitnahmeorgan in seiner Ruhestellung, in Ansicht;
- Fig. 12: das Mitnahmeorgan nach Fig. 11, in einer Zwischenstellung hin zur Eingriffsstellung, in Ansicht;
- Fig. 13: das Mitnahmeorgan nach den Fig. 1 und 12, in seiner Eingriffsstellung mit dem Fördergut, in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

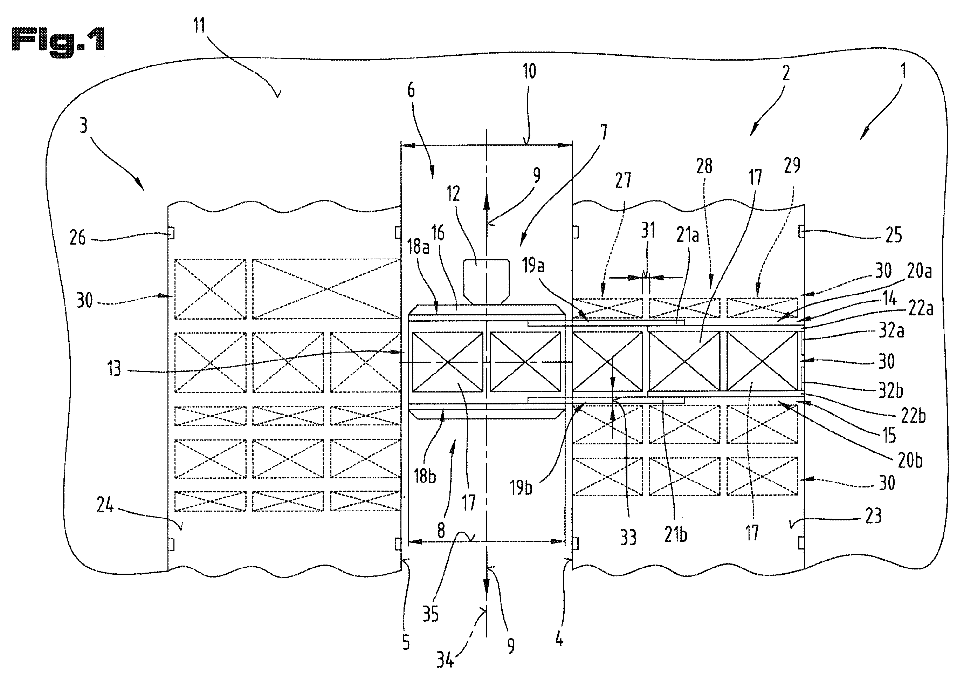

In der Fig. 1 ist stark vereinfacht ein Lagersystem 1 in Draufsicht gezeigt, das hier zwei baulich übereinstimmende und sich spiegelbildlich gegenüber stehende Regallager 2, 3 umfasst. Es könnte aber auch nur auf einer Seite ein Regallager 2 oder 3 vorgesehen sein, ist jedoch zumeist unwirtschaftlich.

Durch einen Abstand zwischen einander zugewendeten Ein- bzw. Auslagerungsseiten 4, 5 der beiden Regallager 2, 3 ist eine Regalgasse 6 ausgebildet, entlang welcher bzw. in der ein Förderfahrzeug 7, wie ein Regalbediengerät, ein Transportshuttle usw., mit einem Lastaufnahmemittel 8, beispielsweise auf nicht näher dargestellten Führungsbahnen in Gassenrichtung - gemäß den eingetragenen Pfeilen 9 - rechnergesteuert verfahrbar ist. Der Abstand zwischen den Ein- bzw. Auslagerungsseiten 4, 5 definiert eine lichte Weite und somit eine Gassenbreite 10.

Das Förderfahrzeug 7 kann dabei über Fahrwerke an einer auf einer horizontalen Aufstandsfläche 11 angeordneten Führungsbahn, insbesondere einer Fahrschiene, und einer an einer Decke des Lagersystems 1 befestigten weiteren Führungsbahn, insbesondere einer Fahrschiene, abgestützt bzw. geführt sein und ist über zumindest eine Antriebsanordnung entlang der Fahrschienen verstell- bzw. verfahrbar. Das Förderfahrzeug 7 kann einen mit den beiden Fahrwerken verbundenen, im Wesentlichen senkrecht zur Aufstandsfläche 11 erstreckenden Mast 12 aufweisen. Der Mast 12 ist mit einer Führungsanordnung versehen, entlang welcher mittels eines Hubantriebes das Lastaufnahmemittel 8 mit einer horizontal verlaufenden Hubplattform 13 in einer zur Aufstandsfläche 11 senkrechten Richtung rechnergesteuert verstellbar, insbesondere verfahrbar, ist. Der Mast 12 mit dem Lastaufnahmemittel 8 sind in Gassenrichtung - gemäß Pfeilen 9 - hintereinander angeordnet. Das Lastaufnahmemittel 8 ist mit zumindest einem, in einer zur Aufstandsfläche 11 parallel verlaufenden Ebene verstellbaren, mehrfach verstellbaren Teleskoparm 14, 15 ausgestattet. In einer bevorzugten Ausführungsvariante umfasst das Lastaufnahmemittel 8 zwei derartige Teleskoparme 14, 15, die auf einem Grundrahmen 16 in einer horizontalen Ebene in Ein- bzw. Ausschubrichtung sowie in zumindest eine Verstellrichtung teleskopierbar sind. Hier wird unter Verstellrichtung die Bewegung des Teleskoparms 14, 15 in nur eines der Regallager 2, 3 verstanden, in welches Waren 17 ein- bzw. ausgelagert werden, um so jene Richtung eindeutig definieren zu können, in die die Ein- bzw. Ausschubbewegung tatsächlich erfolgt.

Jeder Teleskoparm 14, 15 umfasst einen am Lastaufnahmemittel 8 bzw. dessen Grundrahmen 16 gehalterten Untertisch 18a, 18b sowie einen Mitteltisch 19a, 19b und einen Obertisch 20a, 20b, die zu dem Untertisch 18a, 18b und zueinander relativ verstellbar sind. Bei diesem hier dargestellten Ausführungsbeispiel besteht der Mitteltisch 19a, 19b sowie der Obertisch 20a, 20b jeweils aus einem einzigen Schlitten 21a, 21b, 22a, 22b. Damit sind ausschließlich die beiden Schlitten 21a und 22a des Teleskoparms 14 bezüglich seines Untertisches 18a und die weiteren Schlitten 21b und 22b des Teleskoparms 15 bezüglich seines Untertisches 18b geführt verstellbar. Der erste Schlitten 21a ist am Untertisch 18a und der zweite Schlitten 22a am ersten Schlitten 21a geführt gelagert. Gleiches gilt auch für die beiden weiteren Schlitten 21b und 22b.

Jedem Teleskoparm 14, 15 ist zur relativen Verstellung seines Mitteltisches 19a, 19b sowie Obertisches 20a, 20b bzw. seiner Schlitten 21a, 21b, 22a, 22b zueinander eine hier nicht näher dargestellte Antriebsanordnung zugeordnet bzw. stehen diese damit in Antriebsverbindung. Zumeist umfasst die Antriebsanordnung zwischen dem Untertisch 18a, 18b und dem ersten Schlitten 21a, 21b zumindest ein Antriebsorgan, z.B. ein endlos umlaufendes Mitnahmemittel, wie einen Ketten- oder Riementrieb und diese beaufschlagen die Teleskoparme 14, 15 mit einer Antriebskraft.

Das oder die Regallager 2, 3 weisen je nach aufzunehmenden Waren 17 eine Vielzahl von übereinander, in horizontalen Ebenen angeordnete Regalfächer 23, 24 auf. Zur Beabstandung der einzelnen Regalfächer 23, 24 in vertikaler Richtung sind vereinfacht dargestellte Regalsteher 25, 26 vorgesehen. Auf den Regalfächern 23, 24 sind für die einzelnen darauf abzustellenden Waren 17 je nach Größe und Abmessung derselben angedeutete Abstellplätze 27 bis 29 vorgesehen. Die Abstellplätze 27 bis 29 sind in Ein- bzw. Ausschubrichtung hintereinander angeordnet und bilden mit den darauf abgestellten Waren 17 eine Warenreihe 30 aus. Die einzelnen Abstellplätze 27 bis 29 sind derart bemessen, dass die Waren 17 der einzelnen Warenreihen 30 in Förderrichtung jeweils in einem Abstand 31 zueinander angeordnet sind. Dieser Abstand 31 dient dazu, um mit auf den Teleskoparmen 14, 15, insbesondere deren Obertisch 20a, 20b, angeordneten Mitnahmeorganen 32a, 32b jede einzelne Ware 17 auf der von der Regalgasse 6 bzw. dem Lastaufnahmemittel 8 abgewendeten Seite für das Ausschieben aus dem jeweiligen Regalfach 23, 24 hintergreifen zu können.

Um eine optimale Ausnutzung des vorhandenen Raumangebotes, beispielsweise einer gesamten Lagerhalle erzielen zu können, soll mit einem möglichst geringem Abstand 31 zwischen den Waren 17 das Auslangen gefunden werden. Darüber hinaus soll aber auch eine Distanz 33 zwischen den einzelnen Waren 17 in Richtung der Regalgasse 6 bzw. der Bewegungsrichtung des Förderfahrzeuges 7 gemäß den Pfeilen 9 ebenfalls sehr gering gehalten werden, um auch hier eine optimale Platzausnutzung bzw. einen hohen Füllgrad der einzelnen Regalfächer 23, 24 zu erzielen.

Die hier dargestellte Regalgasse 6 mit ihrer Gassenbreite 10 stellt für das Förderfahrzeug 7, insbesondere dessen Lastaufnahmemittel 8, die maximal zur Verfügung stehende Konstruktionsbreite für das Lastaufnahmemittel 8 zwischen den einander zugewendeten Ein- bzw. Auslagerungsseiten 4, 5 dar. So ist das Lastaufnahmemittel 8, insbesondere dessen Hubplattform 13, mit den daran angeordneten Teleskoparmen 14, 15 mit einer dazu geringeren Breitenabmessung auszubilden, um Kollisionen mit den Regalstehern 25, 26 bzw. den Regalfächern 23, 24 zu vermeiden. Weiters ist hier noch angedeutet, dass zentrisch zwischen den beiden Ein-bzw. Auslagerungsseiten 4, 5 eine vertikal ausgerichtete Mittelebene 34 verläuft, welche als Bezugsebene für die nachfolgende Beschreibung dient. Bevorzugt ist das Förderfahrzeug 7, insbesondere das Lastaufnahmemittel 8, zentrisch zu dieser Mittelebene 34 zwischen den beiden Regallagern 2, 3 ausgerichtet.

Eine Basislänge 35 des Lastaufnahmemittels 8, insbesondere des Untertisches 18a, 18b ist dabei um ein vorbestimmtes Ausmaß bezüglich der Gassenbreite 10 verringert, um so eine kollisionsfreie Bewegung des Förderfahrzeuges 7 relativ zu den Regallagern 2, 3 zu ermöglichen. Dabei wird versucht, eine möglichst große Basislänge 35 bezüglich der Gassenbreite 10 zu erzielen. Diese Basislänge 35 stellt aber auch die Grundlage für die maximal zu erreichenden Verstellwege der Schlitten 21a, 21b, 22a, 22b relativ gegenüber dem Untertisch 18a, 18b dar.

Wie hier am Lastaufnahmemittel 8, insbesondere dessen Hubplattform 13 angedeutet, kann dieses eine Anzahl von "n" Waren 17 aufnehmen. Dabei ist die Basiszahl "n" zumindest mit 1 gewählt. Bevorzugt werden jedoch mehrere Waren 17, insbesondere zwei, drei, vier bis hin zu sieben oder acht Waren vom Lastaufnahmemittel 8 auf einmal aufgenommen. Mittels den Teleskoparmen 14, 15 wird diese Anzahl von "n" Waren 17 auf die Abstellplätze 27 bis 29 eingeschoben bzw. dort aufgenommen und abgestellt. Der Einfachheit halber wurden nur drei Abstellplätze 27 bis 29 mit Bezugszeichen versehen, wobei je nach Größe und Anzahl der Waren 17 dann eine erhöhte Anzahl von Abstellplätzen gewählt wird. Aufgrund der gewählten Längenverhältnisse der einzelnen Schlitten 21a, 21b, 22a, 22b und deren gegenseitige Überdeckungs- bzw. Führungslänge ist es möglich, auf den einzelnen Regalfächern 23, 24 eine Anzahl von "n" Waren 17 plus zumindest eine zusätzliche Ware 17 in das Regalfach 23, 24 in der Einschubrichtung sowie in die eine Verstellrichtung der Teleskoparme 14, 15 einzuschieben. Eine Entnahme der einzelnen Waren 17 aus der Warenreihe 30 erfolgt durch Hintergreifen der einzelnen Waren 17 jeweils auf der von der Regalgasse 6 abgewendeten Seite durch die auf den Teleskoparmen 14, 15 angeordneten Mitnahmeorgane 32a, 32b. Dabei wird auch die Ware 17, welche an dem von der Regalgasse 6 entferntesten Abstellplatz 29 abgestellt wurde, auf der von der Regalgasse 6 abgewendeten Seite hintergriffen. Durch den zuvor beschriebenen Abstand 31 zwischen den einzelnen Waren 17 in den einzelnen Warenreihen 30 ist es möglich, das oder die Mitnahmeorgane 32a, 32b in diesen Freiraum zwischen den hintereinander angeordneten Waren 17 einzuschwenken und nur eine einzige Ware 17 und/oder aber auch mehrere dieser Waren 17 aus dem Regalfach 23, 24 hin auf das Lastaufnahmemittel 8 auszuschieben, wobei die Anzahl "n" der Waren 17 von der Aufnahmekapazität des Lastaufnahmemittels 8 abhängt. Unter der Aufnahmekapazität des Lastaufnahmemittels 8 wird hier die Anzahl der möglichen Stellplätze der Waren 17 am Lastaufnahmemittel 8 verstanden. Die Stellplatzanzahl am Lastaufnahmemittel 8 ist einerseits abhängig von den Abmessungen des Lastaufnahmemittels 8 selbst und andererseits von den Abmessungen sowie der Ausrichtung der abzustellenden Waren 17 selbst. Dabei entspricht die Anzahl der Stellplätze der vom Lastaufnahmemittel 8 möglichen aufzunehmenden Anzahl von "n"-Waren 17.

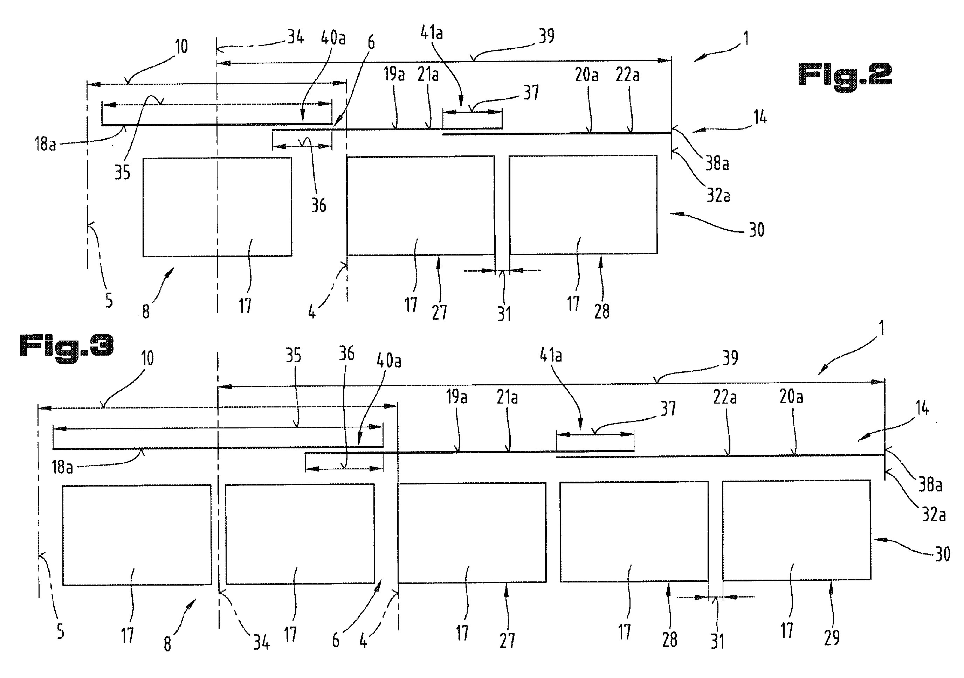

In der Fig. 2 ist schematisch vereinfacht für einen Teleskoparm 14 dargestellt, wie sich die maximale Ausfahrlänge des Teleskoparms 14 im Verhältnis zur Gassenbreite 10 und dem in dieser aufgenommenen Förderfahrzeug 7, insbesondere dessen Lastaufnahmemittel 8, zusammensetzt. Mittig zwischen den Ein- bzw. Auslagerungsseiten 4, 5 ist die Mittelebene 34 dargestellt. Die Basislänge 35 des Teleskoparms 14 bzw. des Lastaufnahmemittels 8 ist zwischen 1 % und 10 %, insbesondere 5 % geringer als die Gassenbreite 10. Der Untertisch 18a ist vereinfacht durch eine Linie angedeutet. Der Mitteltisch 19a sowie der Obertisch 20a mit ihren Schlitten 21a, 22a sind dabei in einer Stellung bei einer vollkommenen Verlagerung der beiden Schlitten 21a, 22a bezüglich des Untertisches 18a dargestellt. Durch die relative maximale Verlagerung des Mitteltisches 19a mit seinem Schlitten 21a bezüglich dem Untertisch 18a ist eine Führungslänge 36 im Bereich der einander überdeckenden Lage dargestellt. Eine weitere Führungslänge 37 ist zwischen dem Schlitten 21a des Mitteltisches 19a und dem weiteren Schlitten 22a des Obertisches 20a schematisch angedeutet. So beträgt die erste Überdeckungslänge bzw. Führungslänge 36 zwischen dem Untertisch 18a und dem ersten Schlitten 21a des Mitteltisches 19a maximal 30 % und die weitere Führungslänge 37 zwischen den beiden Schlitten 21a, 22a ebenfalls maximal 30 % jeweils bezogen auf die Basislänge 35 des Untertisches 18a. Gleiches gilt auch für die einzelnen Tische 18b, 19b, 20b des weiteren Teleskoparms 15 und wird hier nicht näher darauf eingegangen. Mit dieser Begrenzung der maximalen Führungslänge 36, 37 wird weiters erreicht, dass bei einer vollkommenen Verlagerung des Mitteltisches 19a, 19b und des Obertisches 20a, 20b in die eine Verstellrichtung relativ gegenüber dem Untertisch 18a, 18b ein Stirnende 38a, 38b des Obertisches 20a, 20b die in der halben Basislänge 35 des Untertisches 18a, 18b angeordnete und senkrecht zur Verstellrichtung der Teleskoparme 14, 15 ausgerichtete Mittelebene 34 um ein Ausmaß 39 zwischen dem 3,8-fachen und dem 4,2-fachen, insbesondere dem 4,0-fachen der halben Basislänge 35 des Untertisches 18a, 18b überragt. Dabei stellt die halbe Basislänge 35 das Bezugsmaß dar. Im Bereich des Stirnendes 38a, 38b ist hier vereinfacht das Mitnahmeorgan 32a durch einen Strich angedeutet.

Im Bereich des Lastaufnahmemittels 8, insbesondere des hier dargestellten Untertisches 18a, ist eine Ware 17 dargestellt. Auf den beiden Abstellplätzen 27, 28 sind die darauf eingelagerten bzw. abgestellten Waren 17 angedeutet, wobei zwischen diesen in Richtung der Warenreihe 30 gesehen der Abstand 31 als Freiraum belassen worden ist.

Um dieses Ausmaß 39 des maximalen Hubes bzw. Ausfahrweges der Teleskoparme 14, 15 bezogen auf die Mittelebene 34 erreichen zu können, ist zwischen dem Untertisch 18a, 18b eine erste Führungsanordnung 40a, 40b und zwischen den beiden Schlitten 21a, 22a und 21b, 22b eine weitere Führungsanordnung 41a, 41b vorgesehen. Auf die detaillierte Ausbildung der Führungsanordnungen wird später noch näher darauf eingegangen. So ist die erste Führungsanordnung 40a, 40b zwischen dem Untertisch 18a, 18b und dem Mitteltisch 19a, 19b durch eine Wälzführung und die weitere Führungsanordnung 41a, 41b zwischen dem Mitteltisch 19a, 19b und dem Obertisch 20a, 20b bzw. deren Schlitten 21a, 22a bzw. 21b, 22b durch eine Gleitführung gebildet. Dabei kann von einer Hybridführung gesprochen werden.

Hier ist auf dem Lastaufnahmemittel 8 eine einzige Ware 17 und im Regalfach 23, 24 eine zusätzliche Ware, also insgesamt zwei Waren, dargestellt.

In der Fig. 3 ist eine weitere mögliche Anordnung der Waren 17 im Bereich des Lastaufnahmemittels 8 sowie des Regallagers 23, 24 im Bereich der Abstellplätze 27 bis 29 dargestellt, wie dies bereits in der Fig. 2 detailliert beschrieben worden ist.

Im Gegensatz zu der Darstellung in der Fig. 2 kann das Lastaufnahmemittel 8 in Bewegungs- bzw. Verstellrichtung der Teleskoparme 14, 15 gesehen, zwei Stück Waren 17 mit Abstand zueinander aufnehmen und einzeln und/oder getrennt auf die dafür vorgesehenen Abstellplätze 27 bis 29 einschieben bzw. einlagern.

Auch hier ist wiederum eine relativ geringe Führungslänge 36 und/oder 37 zwischen den einzelnen Tischen bzw. deren Schlitten vorgesehen, um ein maximales Ausmaß 39 der Arbeitslänge der Teleskoparme 14, 15 zu erreichen, mit welchem das Stirnende 38a bzw. 38b die Mittelebene 34 in senkrechter Richtung dazu überragt. Von den zwei Stück abgestellten Waren am Lastaufnahmemittel 8 ist es wiederum möglich, zumindest eine zusätzliche Ware 17 auf einem der Abstellplätze 27 bis 29 im Regalfach 23, 24 abzustellen bzw. einzuschieben. Mit dem Mitnahmeorgan 32a, 32b kann auch die von der Regalgasse 6 am weitesten distanzierte und abgestellte Ware 17 auf der von der Regalgasse 6 bzw. vom Lastaufnahmemittel 8 abgewendeten Seite hintergriffen werden, um so eine gesicherte Ausschubbewegung ausgehend vom Regalfach 23, 24 auf das Lastaufnahmemittel 8 durchführen zu können.

Je nach gewählter Basislänge 35 des Lastaufnahmemittels 8 bzw. der Teleskoparme 14, 15 und den Abmessungen der zu lagernden Waren 17 können aber auch mehr als zwei Stück Waren am Lastaufnahmemittel 8 aufgenommen werden, um stets zumindest eine zusätzliche Ware von den "n" Waren am Lastaufnahmemittel 8 hin in das Regalfach 23, 24 auszuschieben bzw. dort einzulagern. Bei einer entsprechenden Abmessung der Waren 17 in Bezug zur Basislänge 30 ist es aber auch möglich, mehr als eine zusätzliche Ware in das Regalfach 23, 24 in einer einzigen Warenreihe 30 hintereinander einzulagern. Dabei kann die Anzahl der zusätzlichen Waren 17 zwei Stück, drei Stück, vier Stück oder aber auch mehr betragen.

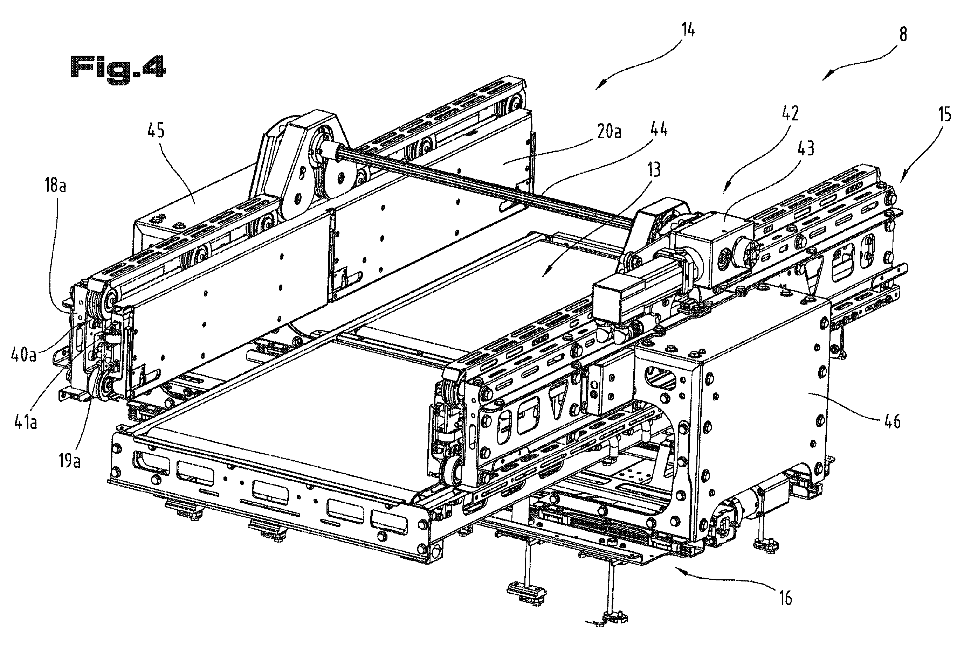

In der Fig. 4 ist eine mögliche Ausbildung eines Lastaufnahmemittels 8 gezeigt, wobei wiederum, um unnötige Wiederholungen zu vermeiden, auf die detaillierte Beschreibung in den vorangegangenen Fig. 1 bis 3 hingewiesen bzw. Bezug genommen wird. Gleichfalls werden für gleiche Teile gleiche Bezugszeichen wie in den vorangegangen Fig. 1 bis 3 verwendet. Dabei sei erwähnt, dass das Lastaufnahmemittel 8 den Grundrahmen 16 umfasst, über welchen es mit dem zuvor beschriebenen Mast 12 verbunden sein kann.

Der Grundrahmen 16 lagert nicht nur die Hubplattform 13 sondern auch die beiden Teleskoparme 14, 15, welche in senkrechter Richtung zur zuvor beschriebenen Mittelebe 34 in beide Regallager 2, 3 hinein teleskopierbar sind. Gleichfalls können die beiden Teleskoparme 14, 15 aufeinander zu sowie voneinander weg bewegt werden, wobei hier eine Führung am Grundrahmen 16 vorgesehen ist. Bevorzugt erfolgt dies zentrisch bezüglich der Hubplattform 13. Aus Übersichtlichkeitsgründen wurde auf die detaillierte Darstellung verzichtet. Um eine relative Verstellung der Mitteltische 19a, 19b sowie Obertische 20a, 20b bzw. deren Schlitten 21a, 21b, 22a, 22b relativ gegenüber dem Untertisch 18a, 18b zu erzielen, ist hier vereinfacht ein Teil einer Antriebsanordnung 42 dargestellt, mit welcher über eine gemeinsame Antriebseinheit 43 die relative Verlagerung des Mitteltisches 19a, 19b sowie Obertisches 20a, 20b relativ gegenüber dem Untertisch 18a, 18b durchgeführt werden kann. Bei diesem hier dargestellten Ausführungsbeispiel wird beiden Teleskoparmen 14, 15 eine einzige gemeinsame Antriebseinheit 43 zugeordnet bzw. steht diese damit in Antriebsverbindung. Zum gleichzeitigen synchronen Antrieb beider Teleskoparme 14, 15 ist eine sich zwischen den beiden Teleskoparmen 14, 15 erstreckende Antriebswelle 44 vorgesehen. So wird ausgehend von der Antriebseinheit 43, wie beispielsweise einem Antriebsmotor, das Antriebsmoment auf die gemeinsame Antriebswelle 44 übertragen und ausgehend von dieser, über das zuvor beschriebene und entsprechend umgelenkte, endlose Antriebsorgan und von diesem weiter auf den Schlitten 21a, 21b des Mitteltisches 19a, 19b weitergeleitet. Dies wird nachfolgend noch detaillierter beschrieben und gezeigt. Damit ergeben sich ein Kostenvorteil und auch eine geringere Eigenmasse des Lastaufnahmemittels 8. Weiters wird die dazu notwendige Steuerung vereinfacht.

Weiters ist hier noch gezeigt, dass die Antriebseinheit 43 mitsamt der Antriebswelle 44 oberhalb der Hubplattform 13, insbesondere auf der von den Teleskoparmen 14, 15 abgewendeten Seite derselben vorgesehen ist. Damit ist die Antriebseinheit 43 sowie die damit in Antriebsverbindung stehende Antriebswelle 44 auch auf der von den Führungsanordnungen 40a, 40b, 41a, 41b abgewendeten Seite der Hubplattform 13 und somit auch oberhalb dieser angeordnet.

Damit ergibt sich der Vorteil, dass mit einem geringeren Platzbedarf das Auslangen gefunden werden kann und so, das in einem vorgegebenen Raum bzw. den Abmessungen entsprechende Nutzvolumen besser ausgenützt werden kann. Dies deshalb, da bei ansonst üblichen Anordnungen der Antriebseinheit 43 diese unterhalb der Hubplattform 13 vorgesehen ist und so ein nicht ausgenutzter Rauminhalt zwischen der Aufstandsfläche 11 und dem untersten Regalfach 23, 24 des Regallagers 2, 3 verloren geht. Mit dieser Anordnung ist es möglich, sich mit dem gesamten Lastaufnahmemittel 8 in Vertikalrichtung gesehen, näher hin zur Aufstandsfläche 11 bewegen zu können und so auch den bodennahen Raum nicht ungenutzt zu lassen. Dadurch, dass die lichte Weite zwischen der Oberseite der Hubplattform 13 und der Unterkante der Antriebswelle 44 an das höchste zu fördernde Fördergut (Ware 17) angepasst werden kann, wird so eine geringe Höhe des Lastaufnahmemittels 8 erzielt. So kann das untere und obere Anfahrmaß des Lastaufnahmemittels 8 bezogen auf das gesamte Lagersystem 1 verringert werden und damit ein möglichst hohes Lagervolumen erreicht werden.

Eine besonders bevorzugte Ausführungsform zur Ausbildung der Hubplattform 13 wird dann erreicht, wenn diese in Richtung der Gassenbreite 10 der Regalgasse 6 gesehen mit zumindest einem Gurtförderer ausgeführt wird, da so das Fördergut, wie die Ware 17, ganzflächig gestützt werden kann und so auch eine schlechte Qualität von beispielsweise Einwegkartons oder dergleichen gefördert oder verschoben werden können. Zusätzlich ist es aber auch noch möglich, den Gurtförderer auf der von der Ware 17 bzw. dem Fördergut abgewendeten Seite mittels einer Stützplatte oder dergleichen zu unterstützten, um auch schwerere Waren durchhangfrei abstützten zu können. Als Antrieb derartiger Gurtförderer können beispielsweise Trommelmotore Anwendung finden, bei denen das Umlenkelement auch gleichzeitig ohne seitlich oder extern angeordnete Antriebe von innen her angetrieben werden kann. Dies ist eine besonders platzsparende und flexible Antriebsvariante. Dabei wird die Hubplattform 13, wenn diese als Gurtförderer ausgebildet ist, seitlich durch zwei durchgängige Träger gebildet, wobei an deren Enden die Antriebsmotore in den Umlenkrollen bzw. Umlenkwalzen angeordnet sind. Bevorzugt werden über die Breitenerstreckung der Hubplattform 13 in senkrechter Richtung zur Regalgasse 6 gesehen zwei oder mehrere Gurtförderer eingesetzt, um bei mehreren am Lastaufnahmemittel 8 abgestellten Waren 17 eine noch höhere Flexibilität der Hubplattform 13 und die Anordnung der Waren 17 auf der selben erzielen zu können.

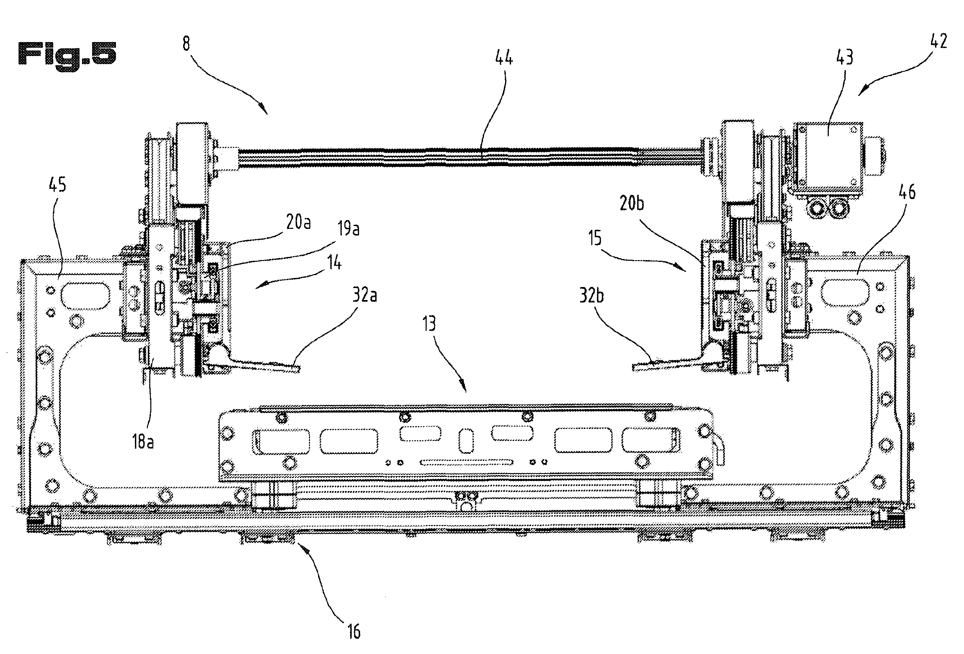

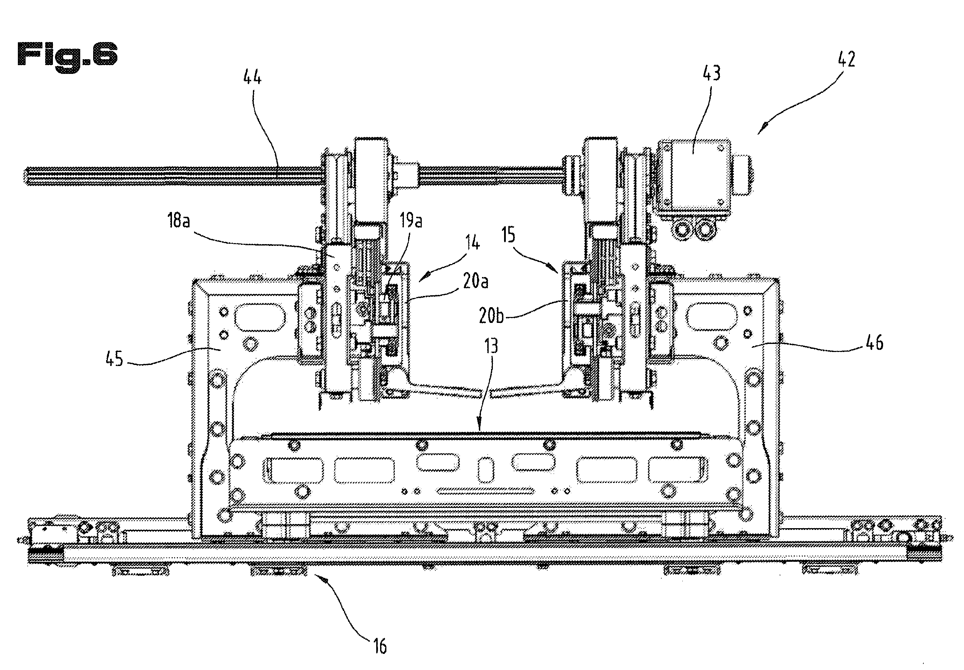

In den Fig. 5 und 6 ist das gegenständliche Lastaufnahmemittel 8 jeweils in einer Ansicht in senkrechter Richtung auf die Mittelebene 34 dargestellt, wobei die beiden Teleskoparme 14, 15 in ihrer Lage zueinander an die Breitenabmessung der zu befördernden Ware 17 gegeneinander verstellt und somit angepasst wurden. Die Hubplattform 13 ist am Grundrahmen 16 feststehend bzw. ortsfest angeordnet und die beiden Teleskoparme 14, 15 werden bevorzugt gemeinsam synchron aufeinander zu bzw. voneinander weg bewegt und so die Distanz zwischen diesen zur Aufnahme der unterschiedlichen Waren 17 angepasst.

So ist in der Fig. 5 die größte lichte Weite zwischen den beiden Teleskoparmen 14, 15 dargestellt, wobei zusätzlich auch noch die am Obertisch 20a, 20b sich in der Förder- bzw. Eingriffsstellung befindlichen Mitnahmeorgane 32a, 32b dargestellt sind.

In der Fig. 6 sind die beiden Teleskoparme 14, 15 in einer Stellung gezeigt, bei der ein minimaler Zwischenraum zwischen den beiden einander zugewendeten Oberschlitten 20a, 20b mit den beidseitig ausgeschwenkten Mitnahmeorganen 32a, 32b durch die gegenseitige Verstellung verblieben ist. Um diese Verstellung der beiden Teleskoparme 14, 15 relativ gegenüber dem Grundrahmen 16 durchführen zu können, sind die beiden Teleskoparme 14, 15 unter Zwischenschaltung eigener Tragwerke 45, 46 relativ verstellbar und am gemeinsamen Grundrahmen 16 geführt gelagert. Die synchrone gegenseitige Verstellung der beiden Teleskoparme 14, 15 zur Veränderung des Zwischenraums zwischen den beiden Teleskoparmen 14, 15 kann mit unterschiedlichsten Antriebsmitteln, wie beispielsweise gegenläufige Zugmittel, Schrittmotoren, Stellmotoren oder dergleichen erfolgen.

Weiters ist daraus zu ersehen, dass die gemeinsame Antriebswelle 44 hier beispielsweise als Keilwelle ausgebildet ist und so auf einfache Art und Weise auch die Breitenanpassung der beiden Teleskoparme 14, 15 zueinander keinen Einfluss auf die Weiterleitung des Antriebsmoments ausgehend von der Antriebseinheit 43 über die Antriebswelle 44 hin zu den Schlitten der Teleskoparme 14, 15 hat.

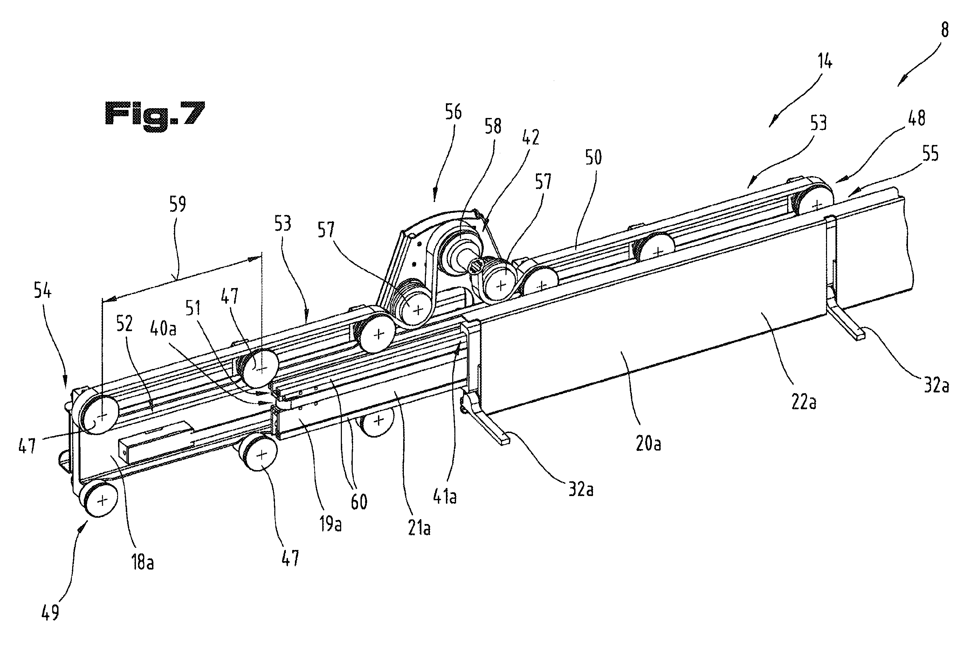

In der Fig. 7 ist ein einzelner Teleskoparm 14 des Lastaufnahmemittels 8 in einer Zwischenstellung des Mitteltisches 19a sowie Obertisches 20a relativ gegenüber dem Untertisch 18a während deren Verstellbewegung dargestellt. Auf die detaillierte Beschreibung der Ausbildung des weiteren Teleskoparms 15 wird hier verzichtet, da die Ausbildung entsprechend spiegelbildlich zu der beschriebenen Ausführungsform gemäß des Teleskoparms 14 auch beim weiteren Teleskoparm 15 erfolgen kann.

Der besseren Übersichtlichkeit halber ist in der Fig. 7 lediglich der Teleskoparm 14 mit seinen Tischen bzw. Schlitten dargestellt, um so die einzelnen Bauteile besser zeigen und beschreiben zu können. Am feststehenden Grundtisch 18a ist ein erster Teil der Führungsanordnung 40a ausgebildet, wobei diese als Wälzführung zur Lagerung und Führung des Schlittens 21a des Mitteltisches 19a ausgebildet ist. Dabei ist die Wälzführung derart ausgebildet, dass am Untertisch 18a in Längserstreckung desselben mehrere in Bewegungsrichtung hintereinander angeordnete Führungsrollen 47 vorgesehen bzw. angeordnet sind. Die hintereinander angeordneten Führungsrollen 47 bilden jeweils für sich eine eigene Führungsrollenreihe 48, 49 aus. Dabei sind die beiden Führungsrollenreihen 48, 49 in einer vertikal ausgerichteten Ebene sowie in senkrechter Richtung bezüglich der Bewegungsrichtung des Mitteltisches 19a voneinander distanziert angeordnet. Damit kann zwischen den einzelnen in Vertikalrichtung voneinander distanzierten Führungsrollen 47 der Mitteltisch 19a geführt am Untertisch 18a bewegt werden.

Weiters ist hier noch zu ersehen, dass die einzelnen Führungsrollen 47 jeder Führungsrollenreihe 48, 49 jeweils paarweise zueinander in senkrechter Richtung bezüglich der Bewegungsrichtung des Mitteltisches 19a ausgerichtet sind. Damit wird eine gegenseitige exakte Führung bzw. Einspannung des Mitteltisches 19a zwischen unmittelbar einander gegenüber liegenden Führungsrollen 47 erzielt und so eine nahezu spielfreie Lagerung bzw. Führung erreicht.

Da ein Teil der Antriebsanordnung 42 ebenfalls am Untertisch 18a angeordnet ist, sind auch die einzelnen Führungsrollen 47 in entsprechender Weise am Untertisch 18a angeordnet und gelagert. Weiters ist hier noch dargestellt, dass die Antriebsanordnung 42 weiters noch ein bevorzugt umlaufendes Zugmittel 50 sowie eine am Mitteltisch 19a angeordnete und mit dem Zugmittel 50 in Eingriff stehende Zahnstange 51 umfasst. Dabei wird das Zugmittel 50 beispielsweise durch eine Kette, einen Zahnriemen oder dergleichen gebildet. Durch den gewählten Längsverlauf des Zugmittels 50 am Untertisch 18a ist das Zugmittel 50 derart auszubilden, dass ein beidseitiger und somit doppelter formschlüssiger Eingriff in das Zugmittel 50 erfolgen kann. Die Zahnstange 51 weist ein Gegenprofil auf, welches mit dem Zugmittel 50 in entsprechender Weise in Eingriff steht. Damit kann die Antriebsbewegung ausgehend von der Antriebseinheit 43 über ein entsprechendes Antriebsrad hin auf das Zugmittel 50 und in weiterer Folge durch das Zusammenwirken des Zugmittels 50 mit der Zahnstange 51 auf den Mitteltisch 19a übertragen werden. Die gegenseitige Kupplung des Mitteltisches 19a mit dem Obertisch 20a zur gegenseitigen Bewegung erfolgt gemäß dem bekannten Stand der Technik und wird nicht näher darauf eingegangen.

Das Zugmittel 50 weist seinerseits einen ersten Längsabschnitt 52 auf, welcher an den der Antriebseinheit 43 näher liegenden Führungsrollen 47 der hier oberen Führungsrollenreihe 48 auf der von der Antriebseinheit 43 abgewendeten Seite daran geführt und abgestützt ist. Damit ist dieser erste Längsabschnitt 52 des Zugmittels 50 dem Schlitten 21a des Mitteltischs 19a zugewendet und steht dort mit der daran angeordneten bzw. ausgebildeten Zahnstange 51 in Eingriff. Die einzelnen Führungsrollen 47 der oberen Führungsrollenreihe 48 dienen zur Abstützung des ersten Längsabschnitts 52 des Zugmittels 50 und bilden dabei Gegenlager aus.

Das Zugmittel 50 umfasst auch noch zumindest einen weiteren Längsabschnitt 53. Der oder die weiteren Längsabschnitte 53 verlaufen auf der von der Zahnstange 51 abgewendeten und der Antriebseinheit 43 näher liegenden Seite, der bei diesem Ausführungsbeispiel oberen Führungsrollenreihe 48. Dabei ist an jedem in Bewegungsrichtung gesehen voneinander distanzierten Ende 54, 55 des Untertisches 19a ein Führungsrollenpaar der Führungsrollen 47 angeordnet. Jede von den in den voneinander distanzierten Enden 54, 55 angeordneten Führungsrollen 47 der oberen Führungsrollenreihe 48 bildet eine Umlenkung für das Zugmittel 50 aus. Bei diesem hier gezeigten Ausführungsbeispiel sind auf der vom ersten Längsabschnitt 52 abgewendeten Seite an den Führungsrollen 47 ausgehend von den beiden Enden 54, 55 jeweils ein eigener weiterer Längsabschnitt 53 ausgebildet, welche sich jeweils hin bis zu einem Mittelabschnitt 56 des Untertisches 18a erstrecken. In diesem Mittelabschnitt 56 erfolgt auch die Anordnung der zuvor beschriebenen Antriebseinheit 43 mit der Antriebswelle 44. So sind die beiden weiteren Längsabschnitte 53 des Zugmittels 50 an den Führungsrollen 47 des Untertisches 18a geführt, wobei im Mittelabschnitt 56 die weiteren Längsabschnitte 53 des Zugmittels 15 nach oben hin zur Antriebseinheit 43 umgelenkt sind. Dazu werden die dem Mittelabschnitt 56 zugewendeten Endabschnitte der weiteren Längsabschnitte 53 im Bereich der dem Mittelabschnitt 56 benachbart angeordneten Führungsrollen 47 zuerst hin in Richtung auf den ersten Längsabschnitt 53 durch zusätzliche Umlenkräder 57 umgelenkt und anschließend um die Umlenkräder 57 hin zu einem Antriebsrad 58 nach oben hin geführt. Dabei umschlingt das Zugmittel 50 das Antriebsrad 58 in einem Winkel von ca. 180°. Das Antriebsrad 58 steht dann mit der Antriebswelle 44 in Antriebsverbindung, wodurch das Antriebsmoment ausgehend von der Antriebseinheit 43 hin auf das Zugmittel 50 übertragen werden kann. Dazu wäre es zusätzlich noch möglich, die Umlenkräder 57 relativ verstellbar am Untertisch 18 zu haltern, um so die Vorspannung des Zugmittels 50 ein- bzw. nachstellen zu können.

Weiters können die weiteren Längsabschnitte 53 des Zugmittels 50 an der von der Zahnstange 51 abgewendeten sowie der, der Antriebseinheit 43 näher liegenden Seite auch noch an den Führungsrollen 47 der bei diesem Ausführungsbeispiel oberen Führungsrollenreihe 48 abgestützt bzw. geführt sein.

Zur Erzielung der zuvor beschriebenen Führungslänge 36 zwischen dem Untertisch 18a und dem Mitteltisch 19a und der dazu vorgesehenen Führungsanordnung 40a in Form einer Wälzführung sind auch die zusammenwirkenden Führungsrollenpaare in einem entsprechenden Abstand zueinander anzuordnen, um diese geringe Überdeckung bei einer einwandfreien Führung zu erreichen. Dazu ist im linken Teil der Fig. 7 in Längserstreckung des Untertisches 18a gesehen, zwischen der äußersten Führungsrolle 47 und der unmittelbar hin zum Mittelabschnitt 56 nachfolgenden Führungsrolle 47 ein Abstand 59 eingetragen, welcher maximal der Führungslänge 36 entsprechen darf. Bevorzugt jedoch wird dieser Abstand 59 etwas geringer gewählt als die Führungs- bzw. Überdeckungslänge zwischen dem Untertisch 18a und dem Mitteltisch 19a, um eine einwandfreie Führung zu gewährleisten.

Zwischen dem Mitteltisch 19a und dem Obertisch 20a bzw. den diese bildenden Schlitten 21a, 22a ist die zuvor beschriebene weitere Führungsanordnung 41a vorgesehen und im vorliegenden Ausführungsbeispiel als Gleitführung ausgebildet. Dazu sind am Mitteltisch 19a Gleitelemente 60 angeordnet bzw. daran gehaltert, welche vom Schlitten 22a mit einem in etwa C-förmigen Profil umschlossen sind. Dadurch kann der Schlitten 22a relativ gegenüber dem Mitteltisch 19a bzw. dessen Schlitten 21a geführt werden. Dabei kann von einer sogenannten Hybridführung gesprochen werden, da die erste Führungsanordnung 40a zwischen dem Untertisch 18a und dem Mitteltisch 19a durch eine Wälzführung gebildet ist und die weitere Führungsanordnung 41a durch eine Gleitführung.

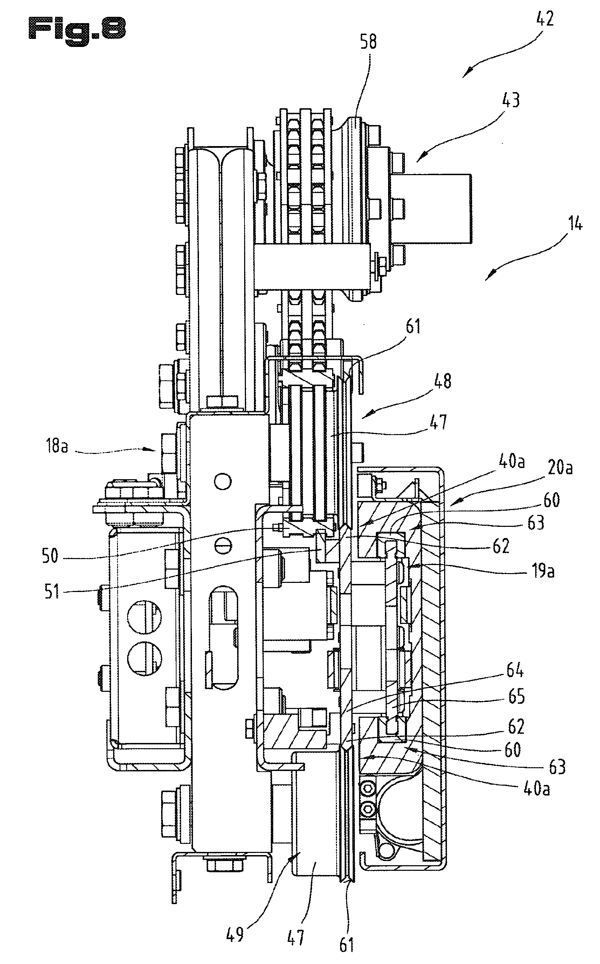

In der Fig. 8 ist eine Schnittdarstellung durch einen der Teleskoparme - im vorliegenden Fall des Teleskoparms 14 - gezeigt, wobei die einzelnen Tische 18a bis 20a in einer zueinander überdeckenden Stellung gezeigt sind. Dabei ist zu ersehen, dass am Untertisch 18a die Führungsrollen 47 der beiden in Vertikalrichtung voneinander distanzierten Führungsrollenreihen 48, 49 angeordnet sind. Oberhalb dieser oberen Führungsrollenreihe 48 ist auch ein Teil der Antriebseinheit 43 mit der Antriebsanordnung 42 vereinfacht dargestellt. Weiters ist das Zugmittel 50 zu ersehen, welches an der oberen Führungsrollenreihe 48 und der Zahnstange 51 des Mitteltischs 19 abgestützt ist bzw. damit in Eingriff steht.

Die Führungsrollen 47 weisen an deren Umfang mindestens eine umlaufende nutförmige Vertiefung 61 auf, welche bevorzugt V-förmig ausgebildet ist. Diese Vertiefungen 61 an den Führungsrollen 47 dienen dazu, ein gegengleich ausgebildetes Profil des Schlittens 21a, 21b des Mitteltisches 19a, 19b zwischen einander zugewendeten Führungsrollenpaaren der einzelnen Führungsrollenreihen 48, 49 zu führen und damit die Wälzführung der Führungsanordnung 40a auszubilden. Dazu weist der Mitteltisch 19a, 19b erste Führungsabschnitte 62 auf, welche in die einander gegenüberliegenden nutförmigen Vertiefungen 61 der Führungsrollen 47 eingreifen. Durch dieses Zusammenwirken wird eine exakte Wälzführung ausgebildet und so kann eine relative Verlagerung des Mitteltischs 19a, 19b relativ gegenüber dem feststehenden Untertisch 18a, 18b erfolgen. Die zuvor beschriebene, weitere Führungsanordnung 41a, 41b zwischen dem Mitteltisch 19a, 19b und dem Obertisch 20a, 20b umfasst einerseits die am Mitteltisch 19a, 19b angeordneten Gleitelemente 60, die in einer Vertikalebene gesehen in senkrechter Richtung bezüglich der Bewegungsrichtung des Mitteltisches 19a, 19b voneinander distanziert angeordnet sind. An diesen voneinander distanzierten Gleitelementen 60 stehen weitere Führungsabschnitte 63 des Obertisches 20a, 20b in Eingriff. Somit ist der Obertisch 20a, 20b über die weitere Führungsanordnung 41a, 41b am Mitteltisch 19a, 19b geführt gelagert. Damit ist die zuvor beschriebene Hybridführung, nämlich die Wälzführung zwischen dem Untertisch 18a und dem Mitteltisch 19a sowie die Gleitführung zwischen dem Mitteltisch 19a und dem Obertisch 20a realisiert.

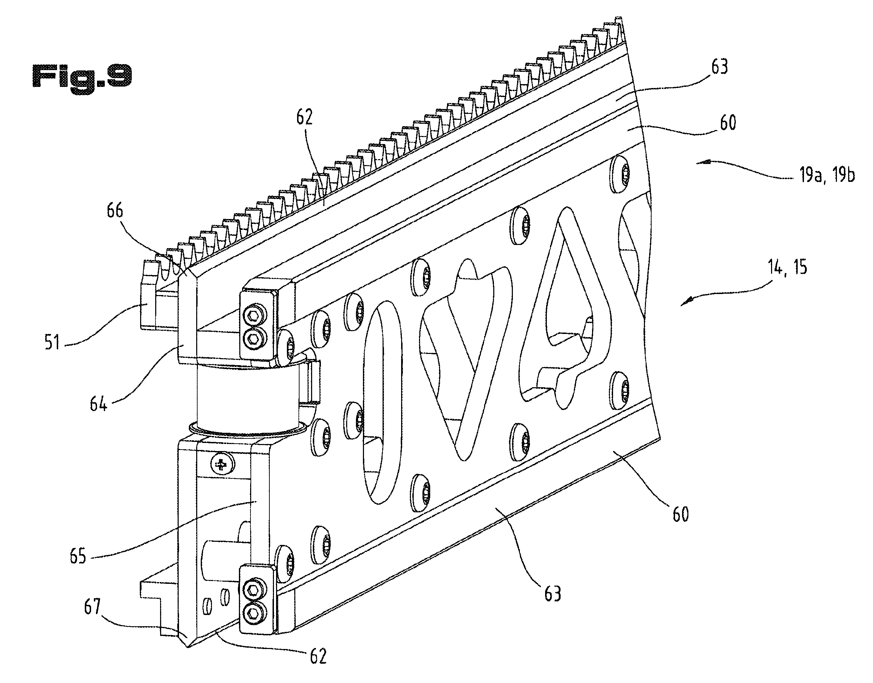

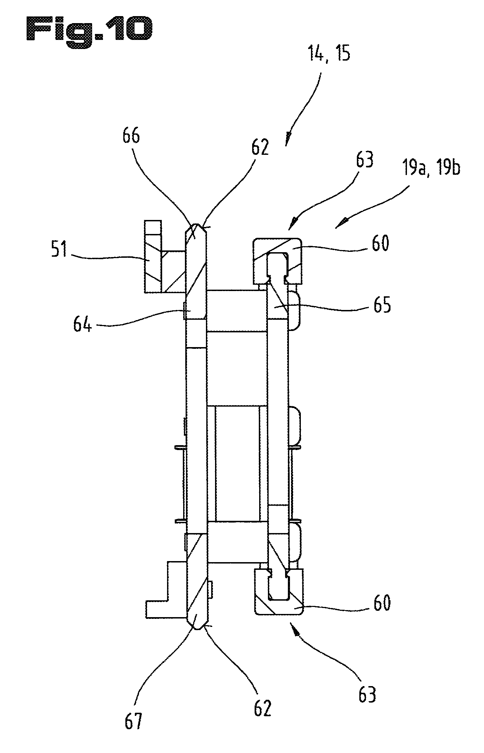

Wie nun besser aus einer Zusammenschau der Fig. 9 und 10 zu ersehen ist, ist bei der erfindungsgemäßen Ausbildung der Mitteltisch 19a, 19b als Leichtbauträger ausgebildet. Dieser umfasst in Querrichtung zur Verstellrichtung der Teleskoparme 14, 15 voneinander distanzierte und miteinander verbundene Seitenwangenteile 64, 65. Dabei können die beiden Seitenwangenteile 64, 65 beispielsweise aus einem Flachprofil gebildet sein, welche über nicht näher dargestellte Verbindungs- bzw. Kupplungselemente miteinander verbunden, insbesondere verschraubt, genietet, verschweißt oder dergleichen sind. Der hier dem Untertisch 18a näher liegende Seitenwangenteil 64 bildet im Bereich seiner beiden in Vertikalrichtung voneinander distanzierten Längsseitenkanten 66, 67 daran zumindest abschnittsweise die ersten Führungsabschnitte 62 aus, welche mit denen zuvor beschriebenen nutförmigen Vertiefungen 61 der gegenüberliegenden Führungsrollen 47 in Eingriff stehen. Zumeist werden die Seitenwangenteile 64, 65 aus einem Stahlwerkstoff gebildet, wobei zur Ausbildung der Führungsabschnitte 62 diese gehärtet werden können, um so eine noch dauerhaftere Lagerung auch über einen längeren Zeitraum am Untertisch 18a, 18b zu erzielen.

Bevorzugt werden die beiden Seitenwangenteile 64, 65 parallel zueinander angeordnet und über nicht näher dargestellte Kupplungsmittel miteinander verbunden. Diese parallele Anordnung erfolgt in einer parallelen Ebene bezüglich der Verstellrichtung der Teleskoparme 14, 15 sowie in senkrechter Ausrichtung bezüglich der Aufstandsfläche 11 bzw. der Hubplattform 13. Zusätzlich ist es auch noch möglich, zur Gewichtsoptimierung des Mitteltisches 19a, 19b in den einzelnen Seitenwangenteilen 64, 65 Ausnehmungen bzw. Durchbrüche anzuordnen, welche so gewählt sind, dass die Tragfähigkeit und somit die Steifigkeit des Mitteltisches 19a, 19b nicht zu stark reduziert wird.

Unabhängig davon wäre es aber auch noch möglich, den als Leichtbauträger ausgebildeten Schlitten 21a des Mitteltisches 19a aus einem Stahlleichtprofil, einem Strangpressprofil aus den unterschiedlichsten Werkstoffen zu bilden. Es wäre aber auch noch möglich, ein Hohlprofil einzusetzen und an diesem dann entsprechende Bauteile anzuordnen, mit denen die Führungsabschnitte 62, 63 ausgebildet werden können.

Parallel neben dem ersten und dem Untertisch 18a, 18b zugwendeten Seitenwangenteil 64 ist im linken, oberen Abschnitt des Mitteltisches 19a die Zahnstange 51 vereinfacht dargestellt, mit welcher das Zugmittel 50 in Antriebsverbindung bzw. in Eingriff steht.

Zur Erzielung eines hohen Füllvolumens des gesamten Lagersystems 1 sollen die in den einzelnen Regallagern 2, 3 abgestellten Waren 17 mit einem möglichst geringen Abstand hintereinander sowie in einem seitlichen Abstand zueinander auf den einzelnen Abstellplätzen 27 bis 29 abgestellt werden. Um eine geringe Distanz zwischen unmittelbar nebeneinander angeordneten Warenreihen 30 der Waren 17 zu erreichen, ist auch ein schlanker Querschnitt der Mitteltische 19a, 19b sowie Obertische 20a, 20b auszuführen, um so auch hier den Platzbedarf sehr gering zu halten. Dies ist in Hinblick auf die Steifigkeit und Festigkeit der Mitteltische 19a, 19b sowie Obertische 20a, 20b sowie den dazwischen angeordneten Führungsanordnungen 40a, 40b, 41a, 41b auszuführen. So müssen die einzelnen Teleskoparme 14, 15 bei vollkommen ausgefahrenem Verstellweg eine geringe Durchbiegung bzw. einen geringe Auslenkung in senkrechte Richtung bezüglich der Aufstandsfläche 11 aufweisen. Dies ist trotz einer relativ kurzen Führungslänge 36, 37 bezogen auf die Basislänge 35 des Untertischs 18a, 18b zu gewährleisten. Gleichfalls ist aber auch auf eine ausreichende Quersteifigkeit in senkrechter Richtung zwischen den beiden Teleskoparmen 14, 15 zu achten, um beim Ein- und/oder Ausschieben der einzelnen Waren 17 eine geringe Verformung bzw. Auslenkung der Teleskoparme 14, 15 zu erzielen. Eine bevorzugte Querschnittsabmessung der beiden verfahrbaren Tische, nämlich dem Mitteltisch 19a, 19b sowie dem Obertisch 20a, 20b sollen diesen einen gemeinsamen Querschnitt bzw. Abmessung mit einer Breite von annähernd 55 mm und einer Höhe von annähernd 175 mm in senkrechter Richtung bezüglich der Aufstandsfläche 11 nicht überschreiten. Mit dieser schlanken Bauart kann beispielsweise der Spalt zwischen unmittelbar nebeneinander angeordneten Warenreihen 30 auf ein Maß von beispielsweise 80 mm bis 100 mm, bevorzugt von 90 mm, herabgesetzt bzw. eingehalten werden. Damit wird wiederum das Füllvolumen des Lagersystems 1 erhöht.

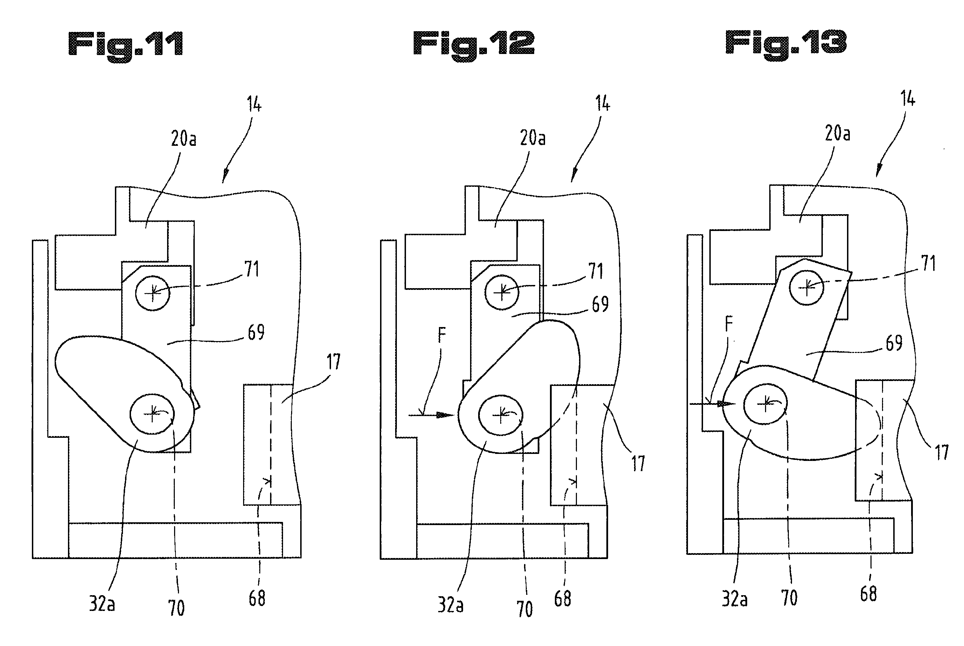

In den Fig. 11 bis 13 ist eine mögliche und gegebene für sich eigenständige Ausbildung eines Mitnahmeorgans 32a an einem Teleskoparm 14 gezeigt, wobei wiederum für gleiche Teile gleiche Bezugszeichen bzw. Bauteilbezeichnungen wie in den vorangegangen Fig. 1 bis 10 verwendet werden. Um unnötige Wiederholungen zu vermeiden wird auf die detaillierte Beschreibung in den vorangegangenen Fig. 1 bis 10 hingewiesen bzw. Bezug genommen.

Der Einfachheit halber ist hier nur eine Ware 17 in Form eines Fördergutes dargestellt, wobei es sich hier beispielsweise auch um eine Palette, einen Förderkorb, ein Tablar oder dergleichen zur Aufnahme von Waren handeln kann. Diese Ware 17 weist an der dem Teleskoparm 14 zugewendeten Seite eine bevorzugt schlitzförmige Ausnehmung 68 auf, in welche das Mitnahmeorgan 32a für den Fördervorgang hinein geschwenkt bzw. hinein verstellt werden kann. Um eine Beschädigung der zu fördernden Ware 17 bzw. dessen Aufnahmeorgan zu vermeiden, ist das Mitnahmeorgan 32a unter Zwischenschaltung eines Schwenkhebels 69 relativ gegenüber dem Teleskoparm 14, insbesondere des Obertisches 20a, 20b, versschwenkbar daran gelagert. Dazu ist das Mitnahmeorgan 32a in einer senkrecht zur Bewegungsrichtung des Mittel- bzw. Obertisches 19a, 19b, 20a, 20b ausgerichteten Ebene um eine parallel zur Bewegungsrichtung verlaufende bzw. ausgerichtete Drehachse 70 mit einem nicht näher dargestellten Antriebsmittel von einer innerhalb des Querschnitts des Obertisches 20a, 20b befindlichen Freigabestellung in eine den Obertisch 20a, 20b überragende Eingriffsstellung verstellbar. An einem Ende des Schwenkhebels 69 ist das Mitnahmeorgan 32a um die Drehachse 70 schwenkbar gelagert, wobei hingegen im davon abgewendeten weiteren Ende des Schwenkhebels 69 dieser um eine parallel zur Drehachse 70 des Mitnahmeorgans 32a ausgerichtete Schwenkachse 71 bezüglich des Obertisches 20a, 20b daran verschwenkbar ist. Zusätzlich ist dabei der Schwenkhebel 69 mit einer auf diesen einwirkenden Stellkraft hin auf die vom Mitteltisch 19a, 19b abgewendete Seite beaufschlagt. Dies bedeutet, dass der Schwenkhebel 69 um seine Schwenkachse 71 schwenkbar ist und das Ende des Schwenkhebels 69, an welchem das Mitnahmeorgan 32 gelagert ist, hin in Richtung auf die zu verschiebende Ware 17 gedrückt ist. Dies ist vereinfacht durch einen Pfeil mit der Bezeichnung "F" angedeutet und kann beispielsweise durch ein Druckelement, Zugelement oder dergleichen erfolgen. Dies könnte beispielsweise eine Feder sein.

Sobald eine Berührung zwischen der Stirnfläche der Ausnehmung 68 und dem Mitnahmeorgan 32 erfolgen würde - siehe Fig. 12 - kann der mit einer Vorspannkraft beaufschlagte Schwenkhebel 69 auf die von der Ware 17 wegweisende Richtung ausweichen. Dadurch ist ein Einschwenken des Mitnahmeorgans 32a in die Ausnehmung 68 im Zuge seiner Dreh- bzw. Schwenkbewegung um die Drehachse 70 möglich. Durch dieses Ausweichen des Schwenkhebels 69 können Lageungenauigkeiten der zu befördernden Ware 17 in ihrer Ausrichtung bezüglich der Teleskoparme 14, 15 besser ausgeglichen werden, wodurch Beschädigungen nicht nur der Ware 17, sondern auch der Teleskoparme 14, 15, insbesondere deren Mitnahmeorgane 32a, 32b, vermieden werden. Weiters wird dadurch aber auch noch eine Querverlagerung der Teleskoparme 14, 15 in senkrechter Richtung zu deren Verfahrweg sowie in paralleler Richtung zur Aufstandsfläche 11 herabgesetzt bzw. überhaupt vermieden, welche durch die ansonst entstehenden Kollisionskräfte an den Teleskoparmen 14, 15 entstehen würden.

Eine weitere Lagerung bzw. Ausbildung des Mitnahmeorgans 32a, 32b bestünde darin, einstückig an dieses einen daran anschließenden Lagerzapfen auszubilden, welcher eine Lagerstelle für das Mitnahmeorgan 32a, 32b ausbildet, wodurch ein festes und stabiles Mitnahmeorgan im Hinblick auf deren Lagerung und Antrieb erzielbar ist. Mit dem Lagerzapfen wird ein Antriebsmittel, wie ein Getriebemotor, Stellmotor, Hydraulikmotor oder dergleichen, gekuppelt, mit dem dann der Lagerzapfen in Antriebsverbindung steht. Damit kann direkt ausgehend vom Antriebsmittel über den einstückig, mit dem Mitnahmeorgan 32a, 32b ausgebildeten Lagerzapfen eine Momentübertragung erfolgen.

Die Ausführungsbeispiele zeigen mögliche Ausführungsvarianten des Förderfahrzeuges 7, insbesondere dessen Lastaufnahmemittel 8 mit den Teleskoparmen 14, 15.

Der Ordnung halber sei abschließend darauf hingewiesen, dass zum besseren Verständnis des Aufbaus des Förderfahrzeuges 7, insbesondere dessen Lastaufnahmemittel 8 mit den Teleskoparmen 14, 15 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4, 5, 6; 7, 8; 9, 10; 11 bis 13 gezeigten Ausführungen den Gegenstand von eigenständigen Lösungen bilden. Die diesbezüglichen, Aufgaben und Lösungen sind den Detailbeschreibungen dieser Figuren zu entnehmen.

### Bezugszeichenaufstellung

- 1: Lagersystem
- 2: Regallager
- 3: Regallager
- 4: Ein- bzw. Auslagerungsseite
- 5: Ein- bzw. Auslagerungsseite

- 6: Regalgasse
- 7: Förderfahrzeug
- 8: Lastaufnahmemittel
- 9: Pfeil
- 10: Gassenbreite

- 11: Aufstandsfläche
- 12: Mast
- 13: Hubplattform
- 14: Teleskoparm
- 15: Teleskoparm

- 16: Grundrahmen
- 17: Ware
- 18a, 18b: Untertisch
- 19a, 19b: Mitteltisch
- 20a, 20b: Obertisch

- 21a,21b: Schlitten
- 22a, 22b: Schlitten
- 23: Regalfach
- 24: Regalfach
- 25: Regalsteher

- 26: Regalsteher
- 27: Abstellplatz
- 28: Abstellplatz
- 29: Abstellplatz
- 30: Warenreihe

- 31: Abstand
- 32a, 32b: Mitnahmeorgan
- 33: Distanz
- 34: Mittelebene
- 35: Basislänge

- 36: Führungslänge
- 37: Führungslänge
- 38a, 38b: Stirnende
- 39: Ausmaß
- 40a, 40b: Führungsanordnung

- 41a,41b: Führungsanordnung
- 42: Antriebsanordnung
- 43: Antriebseinheit
- 44: Antriebswelle
- 45: Tragwerk

- 46: Tragwerk
- 47: Führungsrolle
- 48: Führungsrollenreihe
- 49: Führungsrollenreihe
- 50: Zugmittel

- 51: Zahnstange
- 52: Längsabschnitt
- 53: Längsabschnitt
- 54: Ende
- 55: Ende

- 56: Mittelabschnitt
- 57: Umlenkrad
- 58: Antriebsrad
- 59: Abstand
- 60: Gleitelement

- 61: Vertiefung
- 62: Erster Führungsabschnitt
- 63: Weiterer Führungsabschnitt
- 64: Seitenwangenteil
- 65: Seitenwangenteil

- 66: Längsseitenkante
- 67: Längsseitenkante
- 68: Ausnehmung
- 69: Schwenkhebel
- 70: Drehachse

- 71: Schwenkachse

## Patentansprüche

1. Teleskoparm (14, 15) für ein Lastaufnahmemittel (8) zum Ein- und Auslagern von Waren (17) in ein bzw. aus einem Regalfach (23, 24) eines Regallagers (2, 3) mit in Förderrichtung hintereinander angeordneten Abstellplätzen (27 bis 29), wobei der Teleskoparm (14, 15) einen Untertisch (18a, 18b), ausschließlich einen zum Untertisch (18a, 18b) relativ verstellbaren Mitteltisch (19a, 19b) und ausschließlich einen Obertisch (20a, 20b) sowie zwischen den Tischen (18a, 18b; 19a, 19b; 20a, 20b) angeordnete Führungsanordnungen (40a, 40b; 41a, 41b), eine Antriebsanordnung (42) für den Mitteltisch (19a, 19b) sowie den Obertisch (20a, 20b) zur relativen Verlagerung derselben bezüglich des Untertisches (18a, 18b) in zumindest eine Verstellrichtung, umfasst, wobei eine erste Führungsanordnung (40a, 40b) zwischen dem Untertisch (18a, 18b) und dem Mitteltisch (19a, 19b) durch eine Wälzführung gebildet ist, **dadurch gekennzeichnet, dass** eine weitere Führungsanordnung (41a, 41b) zwischen dem Mitteltisch (19a, 19b) und dem Obertisch (20a, 20b) durch eine Gleitführung gebildet ist und der Mitteltisch (19a, 19b) als Leichtbauträger ausgebildet ist, welcher in Querrichtung zur Verstellrichtung der Teleskoparme (14, 15) voneinander distanzierte und miteinander verbundene Seitenwangenteile (64, 65) umfasst.

2. Teleskoparm (14, 15) nach Anspruch 1, **dadurch gekennzeichnet, dass** die erste Führungsanordnung (40a, 40b) in Längserstreckung des Untertisches (18a, 18b) gesehen, mehrere in Bewegungsrichtung hintereinander angeordnete Führungsrollen (47) umfasst, wobei die einzelnen hintereinander angeordnete Führungsrollen (47) jeweils eine Führungsrollenreihe (48, 49) ausbilden und die Führungsrollenreihen (48, 49) in einer vertikal ausgerichteten Ebene sowie in senkrechter Richtung bezüglich der Bewegungsrichtung des Mitteltisches (19a, 19b) voneinander distanziert angeordnet sind.

3. Teleskoparm (14, 15) nach Anspruch 2, **dadurch gekennzeichnet, dass** die Führungsrollen (47) an deren Umfang mindestens eine umlaufende nutförmige Vertiefung (61) aufweisen, in welche erste Führungsabschnitte (62) des Mitteltisches (19a, 19b) eingreifen.

4. Teleskoparm (14, 15) nach einem der Ansprüche 1 bis 3, **dadurch gekennzeichnet, dass** die weitere Führungsanordnung (41a, 41b) zwischen dem Mitteltisch (19a, 19b) und dem Obertisch (20a, 20b) am Mitteltisch (19a, 19b) angeordnete Gleitelemente (60) umfasst, die in der Vertikalebene gesehen in senkrechter Richtung bezüglich der Bewegungsrichtung des Mitteltisches (19a, 19b) voneinander distanziert sind und an den Gleitelementen (60) damit in Eingriff stehende weitere Führungsabschnitte (63) des Obertisches (20a, 20b) geführt sind.

5. Teleskoparm (14, 15) nach Anspruch 1, **dadurch gekennzeichnet, dass** die Seitenwangenteile (64, 65) aus einem Flachprofil gebildet sind und dabei an dem dem Untertisch (18a, 18b) näher liegenden Seitenwangenteil (64) im Bereich seiner beiden Längsseitenkanten (66, 67) zumindest abschnittsweise die ersten Führungsabschnitte (62) ausgebildet sind.

6. Teleskoparm (14, 15) nach einem der Ansprüche 1 bis 5, **dadurch gekennzeichnet, dass** die Antriebsanordnung (42) eine Antriebseinheit (43) umfasst, welche oberhalb der Führungsanordnungen (40a, 40b; 41a, 41b) angeordnet ist.

7. Teleskoparm (14, 15) nach einem der Ansprüche 1 bis 6, **dadurch gekennzeichnet, dass** die Antriebsanordnung (42) weiters ein bevorzugt umlaufendes Zugmittel (50), wie eine Kette oder einen Zahnriemen, sowie eine am Mitteltisch (19a, 19b) angeordnete und mit dem Zugmittel (50) in Eingriff stehende Zahnstange (51) umfasst, wobei ein erster Längsabschnitt (52) des Zugmittels (50) an den der Antriebseinheit (43) näher liegenden Führungsrollen (47) der Führungsrollenreihe (48) auf der von der Antriebseinheit (43) abgewendeten Seite daran geführt und abgestützt ist.

8. Teleskoparm (14, 15) nach einem der Ansprüche 1 bis 7, **dadurch gekennzeichnet, dass** das Zugmittel (50) der Antriebsanordnung (42) weitere Längsabschnitte (53) umfasst, welche auf der von der Zahnstange (51) abgewendeten und der Antriebseinheit (43) näher liegenden Seite der Führungsrollenreihe (48), ausgehend von beiden in Bewegungsrichtung der Tische voneinander distanzierten Enden (54, 55) des Untertisches (18a, 18b) hin zu einem Mittelabschnitt (56) des Untertisches (18a, 18b) geführt sind und im Mittelabschnitt (56) die weiteren Längsabschnitte (53) des Zugmittels (50) nach oben hin zur Antriebseinheit (43) umgelenkt sind.

9. Teleskoparm (14, 15) nach Anspruch 8, **dadurch gekennzeichnet, dass** die weiteren Längsabschnitte (53) des Zugmittels (50) an der von der Zahnstange (51) abgewendeten sowie der der Antriebseinheit (43) näher liegenden Seite an den Führungsrollen (47) der Führungsrollenreihe (48) geführt sind.

10. Teleskoparm (14, 15) nach einem der Ansprüche 1 bis 9, **dadurch gekennzeichnet, dass** zumindest ein am Obertisch (20a, 20b) angeordnetes Mitnahmeorgan (32a, 32b) in einer senkrecht zur Bewegungsrichtung des Mittel- bzw. Obertisches (19a, 19b; 20a, 20b) ausgerichteten Ebene um eine parallel zur Bewegungsrichtung verlaufende Drehachse (70) mit einem Antriebsmittel von einer innerhalb des Querschnittes des Obertisches (20a, 20b) befindlichen Freigabestellung in eine den Obertisch (20a, 20b) überragende Eingriffsstellung verstellbar ist und das Mitnahmeorgan (32a, 32b) unter Zwischenschaltung eines Schwenkhebels (69) gemeinsam mit diesem um eine parallel zur Drehachse (70) des Mitnahmeorgans (32a, 32b) ausgerichtete Schwenkachse (71) bezüglich des Obertisches (20a, 20b) verschwenkbar ist, wobei der Schwenkhebel (69) mittels einer zusätzlichen auf diesen einwirkenden Stellkraft hin auf die, vom Mitteltisch (19a, 19b) abgewendete Seite beaufschlagt ist.

11. Lastaufnahmemittel (8) zum Ein- und Auslagern von Waren (17) in ein bzw. aus einem Regalfach (23, 24) eines Regallagers (2, 3) mit in Förderrichtung hintereinander angeordneten Abstellplätzen (27 bis 29) umfassend einen Grundrahmen (16), eine Hubplattform (13), eine Antriebsanordnung (42) sowie Teleskoparme (14, 15) mit je einem Untertisch (18a, 18b), ausschließlich je einem Mitteltisch (19a, 19b) und ausschließlich je einem Obertisch (20a, 20b) sowie zwischen den Tischen (18a, 18b; 19a, 19b; 20a, 20b) angeordnete Führungsanordnungen (40a, 40b; 41a, 41b), wobei die Teleskoparme (14, 15) in Querrichtung zur Bewegungsrichtung bezüglich deren Tische (18a, 18b; 19a, 19b; 20a, 20b) voneinander distanziert angeordnet sind, **dadurch gekennzeichnet, dass** die Teleskoparme (14, 15) nach einem der Ansprüche 1 bis 10 ausgebildet sind.

12. Lastaufnahmemittel (8) nach Anspruch 11, **dadurch gekennzeichnet, dass** die beiden Teleskoparme (14, 15) am Grundrahmen (16) geführt gelagert sind und in Querrichtung zu deren Bewegungsrichtung zentrisch bezüglich des Lastaufnahmemittels (8) verstellbar sind.

13. Lastaufnahmemittel (8) nach Anspruch 11 oder 12, **dadurch gekennzeichnet, dass** die Antriebsanordnung (42) der Teleskoparme (14, 15) zumindest ein Zugmittel (50) umfasst und dass mit jedem der oberhalb der Führungsanordnungen (40a, 40b; 41a, 41b) umgelenkten Zugmittel (50) der Teleskoparme (14, 15) ein eigenes Antriebsrad (58) in Antriebsverbindung steht und weiters mit den Antriebsrädern (58) ein Antriebsmotor in Antriebsverbindung steht.

14. Lastaufnahmemittel (8) nach Anspruch 13, **dadurch gekennzeichnet, dass** die Antriebsverbindung ausgehend vom Antriebsmotor hin zu den Antriebsrädern (58) über eine gemeinsame sich zwischen den beiden Teleskoparmen (14, 15) erstreckende Antriebswelle (44) erfolgt.

## Claims

1. Telescopic arm (14, 15) for a load-bearing means (8) for storing and removing goods (17) in and from a shelf compartment (23, 24) of high-bay racking (2, 3) with storage places (27 to 29) disposed one after the other in the conveying direction, which telescopic arm (14, 15) comprises a bottom table (18a, 18b), exclusively one middle table (19a, 19b) displaceable relative to the bottom table (18a, 18b) and exclusively one top table (20a, 20b) as well as guide arrangements (40a, 40b; 41a, 41b) disposed between the tables (18a, 18b; 19a, 19b; 20a, 20b), a drive arrangement (42) for the middle table (19a, 19b) and top table (20a, 20b) for relatively displacing the latter relative to the bottom table (18a, 18b) in at least one displacement direction, and a first guide arrangement (40a, 40b) in the form of a roller guide is disposed between the bottom table (18a, 18b) and the middle table (19a, 19b), **characterised in that** another guide arrangement (41a, 41b) in the form of a slide guide is disposed between the middle table (19a, 19b and the top table (20a, 20b), and the middle table (19a, 19b) is provided in the form of a lightweight support comprising side panel parts (64, 65) spaced apart from one another in the direction disposed transversely to the displacement direction of the telescopic arms (14, 15) and connected to one another.

2. Telescopic arm (14, 15) as claimed in claim 1, **characterised in that** the first guide arrangement (40a, 40b) comprises several guide rollers (47) disposed one after the other in the direction of movement as viewed in the longitudinal extension of the bottom table (18a, 18b), and the individual guide rollers (47) disposed one after the other respectively form a guide roller row (48, 49), and the guide roller rows (48, 49) are disposed in a vertically oriented plane and spaced at a distance apart from one another in the vertical direction relative to the direction of movement of the middle table (19a, 19b).

3. Telescopic arm (14, 15) as claimed in claim 2, **characterised in that** the guide rollers (47) have a circumferentially extending groove-shaped recess (61) at their circumference, in which first guide portions (62) of the middle table (19a, 19b) locate.

4. Telescopic arm (14, 15) as claimed in one of claims 1 to 3, **characterised in that** the other guide arrangement (41a, 41b) comprises slide elements (60) disposed on the middle table (19a, 19b) between the middle table (19a, 19b) and top table (20a, 20b), which are spaced apart from one another in the vertical direction relative to the direction of movement of the middle table (19a, 19b) as viewed in the vertical plane, and other guide portions (63) of the top table (20a, 20b) locating on the slide elements (60) are guided thereby.

5. Telescopic arm (14, 15) as claimed in claim 1, **characterised in that** the side panel parts (64, 65) are made from a flat profile and at least certain portions of the first guide portions (62) are disposed on the side panel part (64) lying closer to the bottom table (18a, 18b) in the region of its two longitudinal side edges (66, 67).

6. Telescopic arm (14, 15) as claimed in one of claims 1 to 5, **characterised in that** the drive arrangement (42) comprises a drive unit (43) which is disposed above the guide arrangements (40a, 40b; 41a, 41b).

7. Telescopic arm (14, 15) as claimed in one of claims 1 to 6, **characterised in that** the drive arrangement (42) further comprises a preferably circulating traction means (50) such as a chain or toothed belt, as well as a toothed rack (51) disposed on the middle table (19a, 19b) and locating with the traction means (50), and a first longitudinal portion (52) of the traction means (50) is guided and supported on the guide rollers (47) of the guide roller row (48) closer to the drive unit (43) on the side remote from the drive unit (43).

8. Telescopic arm (14, 15) as claimed in one of claims 1 to 7, **characterised in that** the traction means (50) of the drive arrangement (42) comprises other longitudinal portions (53), which are guided on the side of the guide roller row (48) remote from the toothed rack (51) and lying closer to the drive unit (43) from the two ends (54, 55) of the bottom table (18a, 18b) spaced apart from one another in the direction of movement of the tables as far as a middle portion (56) of the bottom table (18a, 18b), and the other longitudinal portions (53) of the traction means (50) are deflected upwards towards the drive unit (43) in the middle portion (56).

9. Telescopic arm (14, 15) as claimed in claim 8, **characterised in that** the other longitudinal portions (53) of the traction means (50) are guided on the guide rollers (47) of the guide roller row (48) on the side remote from the toothed rack (51) and lying closer to the drive unit (43).

10. Telescopic arm (14, 15) as claimed in one of claims 1 to 9, **characterised in that** at least one driving element (32a, 32b) disposed on the top table (20a, 20b) can be displaced by means of a drive means in a plane oriented perpendicular to the direction of movement of the middle and top table (19a, 19b; 20a, 20b) about a pivot axis (70) extending parallel with the direction of movement from a release position disposed within the cross-section of the top table (20a, 20b) into a locating position extending across the top table (20a, 20b), and the driving element (32a, 32b) can be pivoted relative to the top table (20a, 20b) about a pivot axis (71) oriented parallel with the axis of rotation (70) of the driving element (32a, 32b) by means of and together with an interconnected pivot lever (69), and the pivot lever (69) is biased towards the side remote from the middle table (19a, 19b) by means of an actuating force acting on it.

11. Load-bearing means (8) for storing and removing goods (17) in and from a shelf compartment (23, 24) of high-bay racking (2, 3) with storage places (27 to 29) disposed one after the other in the conveying direction, comprising a base frame (16), a lifting platform (13), a drive arrangement (42) and telescopic arms (14, 15), each with a bottom table (18a, 18b), exclusively one middle table (19a, 19b) each and exclusively one top table (20a, 20b) each and guide arrangements (40a, 40b; 41a, 41b) disposed between the tables (18a, 18b, 19a, 19b, 20a, 20b), and the telescopic arms (14, 15) are disposed at a distance apart from one another in the direction disposed transversely to the direction of movement relative to their tables (18a, 18b, 19a, 19b, 20a, 20b), **characterised in that** the telescopic arms (14, 15) are as claimed in one of claims 1 to 10.

12. Load-bearing means (8) as claimed in claim 11, **characterised in that** the two telescopic arms (14, 15) are mounted in a guided arrangement on the base frame (16) and can be displaced centrally relative to the load-bearing means (8) in the direction disposed transversely to the direction of movement.

13. Load-bearing means (8) as claimed in claim 11 or 12, **characterised in that** the drive arrangement (42) of the telescopic arms (14, 15) comprises at least one traction means (50) and a separate driving wheel (58) is drivingly connected to each of the traction means (50) of the telescopic arms (14, 15) disposed above the guide arrangements (40a, 40b, 41a, 41b), and a drive motor is also drivingly connected to the driving wheels (58).

14. Load-bearing means (8) as claimed in claim 13, **characterised in that** the drive connection operates from the drive motor to the driving wheels (58) via a common drive shaft (44) extending between the two telescopic arms (14, 15).

## Revendications

1. Bras télescopique (14, 15) pour un moyen de suspension de charge (8) pour stocker et déstocker des marchandises (17) dans ou hors d'un compartiment de rayonnage (23, 24) d'une installation de stockage à rayonnages (2, 3) avec des aires de stockage (27 à 29) disposées les unes après les autres dans le sens de convoyage, dans lequel le bras télescopique (14, 15) comprend un plateau inférieur (18a, 18b), exclusivement un plateau central (19a, 19b) réglable par rapport au plateau inférieur (18a, 18b), et exclusivement un plateau supérieur (20a, 20b), ainsi que des ensembles de guidage (40a, 40b ; 41a, 41b) disposés entre les plateaux (18a, 18b ; 19a, 19b ; 20a, 20b), un ensemble d'entraînement (42) pour le plateau central (19a, 19b) ainsi que pour le plateau supérieur (20a, 20b) pour leur translation relative par rapport au plateau inférieur (18a, 18b) au moins dans une direction de réglage, dans lequel un premier ensemble de guidage (40a, 40b) est formé entre le plateau inférieur (18a, 18b) et le plateau central (19a, 19b) par un guidage de roulement,
**caractérisé en ce qu'**un ensemble de guidage supplémentaire (41a, 41b) entre le plateau central (19a, 19b) et le plateau supérieur (20a, 20b) est formée par un guidage coulissant et le plateau central (19a, 19b) est réalisée sous la forme d'un support léger qui comprend dans la direction transversale à la direction de réglage des bras télescopiques (14, 15) des portions de joue latérales (64, 65) espacées l'une de l'autre et reliées ensemble.

2. Bras télescopique (14, 15) selon la revendication 1, **caractérisé en ce que** le premier ensemble de guidage (40a, 40b), vu selon l'étendue longitudinale du plateau inférieur (18a, 18b), comprend plusieurs galets de guidage (47) disposés les uns après les autres dans le sens de la marche, dans lequel les galets de guidage (47) individuels, disposés les uns après les autres, réalisent respectivement une série de galets de guidage (48, 49), et les séries de galets de guidage (48, 49) sont disposées dans un plan orienté verticalement ainsi qu'à distance les uns des autres dans la direction perpendiculaire par rapport au sens de la marche du plateau central (19a, 19b).

3. Bras télescopique (14, 15) selon la revendication 2, **caractérisé en ce que** les galets de guidage (47) présentent sur leur périphérie au moins une gorge (61) périphérique en forme de rainure, dans laquelle des premières sections de guidage (62) du plateau central (19a, 19b) viennent en prise.

4. Bras télescopique (14, 15) selon l'une quelconque des revendications 1 à 3, **caractérisé en ce que** l'ensemble de guidage supplémentaire (41a, 41b) comprend entre le plateau central (19a, 19b) et le plateau supérieur (20a, 20b) des éléments coulissants (60) disposés au niveau du plateau central (19a, 19b) qui sont espacés les uns par rapport aux autres, vus dans le plan vertical, dans la direction perpendiculaire par rapport au sens de la marche du plateau central (19a, 19b), et **en ce que** des sections de guidage (63) du plateau supérieur (20a, 20b) sont guidées au niveau des éléments coulissants (60) en prise avec ceux-ci.

5. Bras télescopique (14, 15) selon la revendication 1, **caractérisé en ce que** les portions de joue latérales (64, 65) sont réalisées à partir d'un profilé plat, et **en ce que** les premières sections de guidage (62) sont alors réalisées au moins par endroits au niveau de la portion de joue latérale (64) plus proche du plateau inférieur (18a, 18b), dans la zone de ses deux bords longitudinaux (66, 67).

6. Bras télescopique (14, 15) selon l'une quelconque des revendications 1 à 5, **caractérisé en ce que** l'ensemble d'entraînement (42) comprend une unité d'entraînement (43) qui est disposée au-dessus des ensembles de guidage (40a, 40b ; 41a, 41b).

7. Bras télescopique (14, 15) selon l'une quelconque des revendications 1 à 6, **caractérisé en ce que** l'ensemble d'entraînement (42) comprend en outre un moyen de traction (50) de préférence tournant, tel qu'une chaîne ou une courroie crantée, ainsi qu'une crémaillère (51) disposée au niveau du plateau central (19a, 19b) et en prise avec le moyen de traction (50), une première section longitudinale (52) du moyen de traction (50) y étant guidée et supportée au niveau des galets de guidage (47) plus proches de l'unité d'entraînement (43) de la série de galets de guidage (48), du côté détourné de l'unité d'entraînement (43).

8. Bras télescopique (14, 15) selon l'une quelconque des revendications 1 à 7, **caractérisé en ce que** le moyen de traction (50) de l'ensemble d'entraînement (42) comprend des sections longitudinales supplémentaires (53) qui sont guidées du côté de la série de galets de guidage (48), détournée de la crémaillère (51) et plus proche de l'unité d'entraînement (43), en partant des deux extrémités (54, 55) du plateau inférieur (18a, 18b), espacées l'une par rapport à l'autre dans le sens de la marche du plateau, en direction d'une section centrale (56) du plateau inférieur (18a, 18b), et renvoyées dans la section centrale (56) des sections longitudinales supplémentaires (53) du moyen de traction (50) vers le haut en direction de l'unité d'entraînement (43).

9. Bras télescopique (14, 15) selon la revendication 8, **caractérisé en ce que** les sections longitudinales supplémentaires (53) du moyen de traction (50) sont guidées au niveau des galets de guidage (47) de la série de galets de guidage (48) du côté détournée de la crémaillère (51) et plus proche de l'unité d'entraînement (43).

10. Bras télescopique (14, 15) selon l'une quelconque des revendications 1 à 9, **caractérisé en ce qu'**au moins un entraîneur (32a, 32b) disposé au niveau du plateau supérieur (20a, 20b) est réglable dans un plan orienté perpendiculairement au sens de la marche du plateau central ou supérieur (19a, 19b ; 20a, 20b) autour d'un axe de rotation (70) s'étendant en parallèle au sens de la marche par un moyen d'entraînement d'une position de déblocage se trouvant à l'intérieur de la section transversale du plateau supérieur (20a, 20b) vers une position en prise dépassant du plateau supérieur (20a, 20b), et **en ce qu'**avec insertion d'un levier pivotant (69), l'entraîneur (32a, 32b) est pivotant avec celui-ci autour d'un axe de pivotement (71) orienté en parallèle à l'axe de rotation (70) de l'entraîneur (32a, 32b) par rapport au plateau supérieur (20a, 20b), le levier pivotant (69) étant sollicité au moyen d'une force de réglage agissant sur celui-ci vers le côté détourné du plateau central (19a, 19b).

11. Moyen de suspension de charge (8) pour stocker et déstocker des marchandises (17) dans ou hors d'un compartiment de rayonnage (23, 24) d'une installation de stockage à rayonnages (2, 3) avec des aires de stockage (27 à 29) disposées les unes après les autres dans le sens de convoyage, comprenant un cadre de base (16), une plate-forme élévatrice (13), un ensemble d'entraînement (42) ainsi que des bras télescopiques (14, 15) avec respectivement un plateau inférieur (18a, 18b), exclusivement respectivement un plateau central (19a, 19b) et exclusivement respectivement un plateau supérieur (20a, 20b), ainsi que des ensembles de guidage (40a, 40b ; 41a, 41b) disposés entre les plateaux (18a, 18b ; 19a, 19b ; 20a, 20b), dans lequel les bras télescopiques (14, 15) sont espacés les uns par rapport aux autres dans la direction transversale au sens de la marche par rapport à leurs plateaux (18a, 18b ; 19a, 19b ; 20a, 20b), **caractérisé en ce que** les bras télescopiques (14, 15) sont réalisés selon l'une quelconque des revendications 1 à 10.

12. Moyen de suspension de charge (8) selon la revendication 11, **caractérisé en ce que** les deux bras télescopiques (14, 15) sont logés en étant guidés au niveau du cadre de base (16) et sont réglables dans la direction transversale à leur sens de la marche de manière centrée par rapport au moyen de suspension de charge (8).

13. Moyen de suspension de charge (8) selon la revendication 11 ou 12, **caractérisé en ce que** l'ensemble d'entraînement (42) des bras télescopiques (14, 15) comprend au moins un moyen de traction (50), et **en ce qu'**avec chacun des moyens de traction (50) des bras télescopiques (14, 15), renvoyés au-dessus des ensembles de guidage (40a, 40b ; 41a, 41b), une poulie d'entraînement propre (58) se trouve en connexion d'entraînement, et **en ce qu'**en outre, un moteur d'entraînement se trouve en connexion d'entraînement avec les poulies d'entraînement (58).

14. Moyen de suspension de charge (8) selon la revendication 13, **caractérisé en ce que** la connexion d'entraînement s'effectue en partant du moteur d'entraînement vers les poulies d'entraînement (58) par l'intermédiaire d'un arbre d'entraînement (44) commun s'étendant entre les deux bras télescopiques (14, 15).
